# EUROPÄISCHE PATENTSCHRIFT

(11) **EP 2 222 394 B1**
(45) Veröffentlichungstag und Bekanntmachung des Hinweises auf die Patenterteilung: **13.11.2013**
(21) Anmeldenummer: 08863734.3
(22) Anmeldetag: 19.12.2008
(51) Int. Cl.: B01F 17/38, B01F 17/36

(54) **VERFAHREN ZUR HERSTELLUNG VON WACHS IN WASSER DISPERSIONEN AUS SELBSTEMULGIERENDEN GELKONZENTRATEN**
METHOD OF PRODUCING WAX IN WATER DISPERSIONS OF SELF-EMULSIFYING GEL CONCENTRATES
PROCÉDÉ DE FABRICATION DE CIRE DANS DES DISPERSIONS AQUEUSES À PARTIR DE CONCENTRÉS DE GELS AUTO-ÉMULSIFIANTS

(30) Priorität: 24.12.2007 DE 102007063133
(43) Veröffentlichungstag der Anmeldung: 01.09.2010
(73) Patentinhaber: SASOL Germany GmbH, 20537 Hamburg (DE)
(72) Erfinder: MICHEL, Ursula, 46282 Dorsten (DE); KWETKAT, Klaus, 59192 Bergkamen (DE)
(74) Vertreter: Müller Schupfner & Partner
(86) Internationale Anmeldenummer: PCT/DE2008/002097
(87) Internationale Veröffentlichungsnummer: WO 2009/079995

(56) Entgegenhaltungen:
- EP-A- 0 043 091
- EP-A- 1 524 029
- WO-A-02/43672
- DE-A1- 2 928 041
- DE-C- 961 649

## Beschreibung

Die vorliegende Erfindung betrifft ein Verfahren zur Herstellung von Wachs/Öl in Wasser (O/W) Dispersionen aus selbstemulgierenden O/W Gelkonzentraten im laminaren Strömungsfeld..

Dispersionen sind disperse Mehrphasensysteme aus mindestens zwei ineinander nahezu unlöslichen Phasen. Im einfachsten Fall handelt es sich um ein Zweiphasensystem aus einer hydrophilen bzw. polaren, z.B. wässrigen, Phase und einer lipophilen bzw. apolaren öligen Feststoffphase. Die innere oder disperse Phase liegt in Form von Feststoffpartikeln in der äußeren kontinuierlichen Phase vor.

Der Begriff der Mikroemulsion / Mikrodispersion ist in der gängigen Literatur nicht einheitlich gebraucht. Er beschreibt einphasige Systeme, bikontinuierliche Emulsionen, geschwollene Mizellen und andere Strukturen, die klar wie auch trübe sein können. Die Klassifikation einer Emulsion nur über die mittlere Tröpfchengröße als Mikroemulsion ist nicht möglich. Einigkeit herrscht aber, dass Mikroemulsionen thermodynamisch stabile Systeme sind, während andere Emulsionen im Unterschied hierzu kinetisch stabilisiert sind und im thermodynamischen Sinne als instabil bezeichnet werden müssen. Vorliegend wird daher ausschließlich auf die thermodynamische Definition zurückgegriffen.

Nanodispersionen im Sinne der Erfindung sind Dispersionen mit mittleren Tröpfchengrößen kleiner ein Mikrometer. Dispersionen mit mittleren Tröpfchengrößen gleich oder größer ein Mikrometer sind im Sinne dieser Erfindung Makrodispersionen.

Emulsionen mit ausreichend kleiner Tröpfchengröße werden heute zumeist im turbulenten Strömungsfeld, das zumeist über Rotor-Stator Systeme oder unter Zuhilfenahme von Hochdruckhomogenisatoren oder - und dies ist noch eher selten - durch Ultraschall hergestellt, unter Ausnutzung der dadurch erzeugten Kavitationskräfte.

Unter "selbstemulgierenden" O/W Zusammensetzungen werden solche Zusammensetzungen verstanden, welche in Wasser spontan, d.h. ohne den Eintrag mechanischer Energie, wie Rühren oder gar Homogenisieren, zu einer O/W Dispersion mit diskreten Feststoffteilchen zerfallen, die in der Dispersion mobil sind.

Wenn - auch ohne Durchmischen - eine sich nicht entmischende, ggf. milchige, O/W Dispersion resultiert, die für zumindest eine Stunde stabil ist, handelt es sich um eine selbstemulgierende Zusammensetzung im Sinne der vorliegenden Erfindung.

Es sind bereits Systeme für die Herstellung von O/W-Dispersionen beschrieben, die als selbstemulgierend bezeichnet werden. Jedoch wird häufig eine sehr unterschiedliche Auffassung darüber vertreten, was selbstemulgierend ist. In vielen Fällen ist es auch bei vermeintlich selbstemulgierenden bzw. als selbstemulgierend bezeichneten Systemen noch notwendig, heftig zu rühren bzw. zumindest die Komponenten durch Schütteln durchzumischen.

Es gibt z.B. flüssige Vorkonzentrate, typischerweise Öle - in der Regel wasserfrei -welche öllösliche Emulgatoren enthalten, und oft in Kombination mit Hydrokolloiden und Elektrolyten eingesetzt werden. Aus derartigen Vorkonzentraten resultierende O/W-Emulsionen sind häufig nur von durchschnittlicher Qualität hinsichtlich der Lagerstabilität. Für die Selbstemulgierbarkeit der Vorkonzentrate ist die Löslichkeit des Emulgatorsystems in der Ölphase von entscheidender Bedeutung. Feine Öltröpfchen sind hierbei häufig nur herstellbar, wenn die Ölphase und die wasserlöslichen Komponenten spezifisch ausgewählt und in ihren Konzentrationen aufeinander abgestimmt sind. Hierdurch verlieren die Systeme aber an Flexibilität, weil die Konzentrate nicht mehr ausreichend vielseitig eingesetzt werden können.

Um volle Flexibilität sowohl hinsichtlich der Emulgatoren als auch hinsichtlich der Ölphase zu erhalten, ist es Aufgabe der vorliegenden Erfindung ein selbstemulgierendes Konzentrat zu schaffen, das es erlaubt, die Emulgatoren bzw. Tenside auszuwählen, wobei eine breite Auswahl der zu verwendenden Ölkomponenten und natürlich auch der Elektrolyte und ihrer Konzentrationen möglich wird. Eine breite Auswahl einsetzbarer Hydrokolloide wäre hinsichtlich der erwünschten Viskosität wie auch des Hautgefühls und der ggf. gewünschten Wasserfestigkeit der getrockneten Emulsionen ebenfalls wünschenswert.

Gleichzeitig wäre es wünschenswert, ein Konzentrat zu erhalten, das es erlaubt, aufwendige Homogenisierungsvorrichtungen, wie z.B. Rotor-Stator- oder Hochdruckhomogenisatoren, zu vermeiden, und die Verarbeitung bei höheren Temperaturen erlaubt.

DE-A-2928041 betrifft ein Verfahren zur Herstellung von leicht zu Öl-in-Wasser-Emulsionen emulgierenden Massen aus Ölen oder Fetten, Wasser, Emulgator und üblichen Zusätzen. Dabei wird z.B. zu einer Mischung enthaltend Lecithin, Paraffin und Ethanol unter Rühren in Wasser gegeben, worauf sich eine O/W-Emulsion bildet. Die DE-C-961649 beschreibt ein Verfahren zur Herstellung wässeriger Paraffinemulsionen mit Hilfe nichtionogener Emulgatoren unter Vermischen in der Hitze und anschließendem Abkühlen auf Raumtemperatur. Die EP-A-1524029 offenbart leicht emulgierende Zubereitungen aus Wasser und Tensid, aus denen unter Rühren kosmetische Emulsionen hergestellt werden. WO-A1-02/43672 schließlich lehrt ein Verfahren zur Herstellung feinteiliger Emulsionen unter Vermischen von Öl, Emulgator und Wasser und anschließender Homogenisierung unter Druck. Öl-in-Wasser-Dispersionen, herstellbar durch Zusammenbringen von Tensid-haltigen Emulgatorkonzentraten mit einer aufgeschmolzenen bei über 25°C festen Ölphase in einem laminaren Strömungsfeld, offenbaren obige Literaturstellen nicht.

Nach einer Ausgestaltung sollte eine möglichst geringe mittlere Teilchengröße - Mindestanforderung mittlere Teilchendurchmesser unter 1 Mikrometer - zu erzielen sein, ohne auf die Zwischenstufe eines selbstemulgierenden Konzentrats verzichten zu müssen.

Weiterhin sollen Konzentrate zur Verfügung gestellt werden, aus denen sich durch Wasserverdünnung und Zugabe weiterer Stoffe Dispersionen gleich bleibender Qualität herstellen lassen, wobei die Herstellung sowohl kontinuierlich als auch chargenweise erfolgen kann. Für beide Herstellverfahren soll eine schnelle, sichere Qualitätskontrolle ermöglicht werden, um eine durchgehend hohe und gut vorhersagbare Emulsionsqualität zu gewährleisten.

Überraschend löst die vorliegende Erfindung das oben geschilderte Problem durch ein Verfahren zur Bereitstellung von selbstemulgierenden Gelkonzentraten und daraus erhältlichen Makro- und insbesondere Nanodispersionen. Das Verfahren ist durch folgende Schritte gekennzeichnet:
(a) Bereitstellen einer Emulgatorkonzentrates (A) enthaltend zumindest
   (A.1) zu 0 bis 80 Gew.%, vorzugsweise 0,1 bis 75 Gew.%, ein oder mehrere Polyole (P),
   (A.2) zu 0,01 bis 99 Gew.%, bevorzugt 50 bis 70 Gew.% Wasser (W) und
   (A.3) zu 1 bis 80 Gew.%, bevorzugt zwischen 5 und 40 Gew.% und insbesondere zwischen 10 bis 30 Gew.%. ein oder mehrere ionische Tenside (I) und / oder ein oder mehrere nicht-ionische Tenside (N), vorzugsweise beide
   jeweils bezogen auf das Emulgatorkonzentrat (A),
(b) in Kontakt bringen einer Ölphase (O) mit dem Emulgatorkonzentrat (A) im laminaren Strömungsfeld, um ein selbstemulgierendes O/W Gelkonzentrat (G) mit einem Ölgehalt von größer 5 Gew.%, bevorzugt 60 bis 99 % und besonders bevorzugt 80 bis 98 Gew.% zu erhalten,
(c) Zusammenbringen des O/W Gelkonzentrats (G) mit Wasser, das auch weitere Zuschlagsstoffe enthalten kann, um sowohl selbsttätig ohne Einwirken von Scherkräften oder auch beschleunigt unter Zuhilfenahme eines Rührers jeweils aber im laminaren Strömungsfeld eine O/W Makro- (M) oder -Nanoemulsion (C) zu erhalten,
wobei (b) eine bei 25°C feste Wachsphase mit einem Erweichungspunkt größer 25°C ist und beim Inkontaktbringen die zusammengebrachten Komponenten von Schritt (a) und (b) bzw. von Schritt (a), (b) und (c) eine Temperatur über dem Erweichungspunkt haben und die Öl in Wasser Dispersion nach dem Abkühlen suspendierte Wachsfeststoff als dispergierte Phase aufweist.

Bevorzugt sind Nanodispersionen, welche mittlere Teilchengrößen (bestimmt über statische Laserlichtstreuung gemäß DIN/ISO 13320) von unter 1.000 nm und bevorzugt kleiner 500 nm aufweisen.

Das Emulgatorkonzentrat (A) ist bei Raumtemperatur homogen aber nicht zwingend isotrop. Es darf über einen Zeitraum von 2 Stunden keine Separationserscheinungen zeigen und enthält 0,01 bis 99 Gew%, bevorzugt 1 bis 80 Gew%, insbesondere 5 bis 40 Gew% und ganz besonders bevorzugt 10 bis 30 Gew% bzw. 20 bis 30 Gew% Wasser.

Der Anteil des Emulgatorkonzentrats (A) am selbstemulgierenden Gelkonzentrat (G) beträgt insbesondere 1 bis 40 und ganz besonders bevorzugt 2 bis 20 Gew.%.

Der Tensidanteil der aus der spontanen Emulsion des selbstemulgierenden Gels (G) in Wasser resultierenden Emulsion liegt bei < 10 %, bevorzugt bei < 5 %, besonders bevorzugt bei < 3 % und ganz besonders bevorzugt bei < 2 %. Der Gehalt der Ölkomponente des selbstemulgierenden Gelkonzentrats (G) liegt bei 60 bis 99 Gew%, bevorzugt bei 80 bis 98 Gew% und besonders bevorzugt bei 84 bis 96 Gew%.

Die selbstemulgierenden Gelkonzentrate (G) können eine außerordentliche Lagerstabilität aufweisen und können analog der Masterbatches verwendet werden. Sie sind über einen breiten Temperaturbereich lagerstabil. Sie können sowohl klar als auch trüb sein.

Die erfindungsgemäß hergestellten selbstemulgierenden Gelkonzentrate (G) zeichnen sich dadurch aus, dass sie durch Zusammenbringen von Ölkomponenten zum Emulgatorkonzentrat (A) herstellbar sind. Der Gehalt an Ölkomponenten liegt vorzugsweise über dem kritischen Phasenvolumenverhältnis, bei dem eine Inversion der Emulsion zu erwarten wäre, entsprechend der Definition von Ostwald (Wa. Ostwald, Beiträge zur Kenntnis der Emulsionen, Z. Kolloid, 6 (1910), 103-109).

Die Gelkonzentrate können nur durch Vermischung des Emulgatorkonzentrats (A) mit den Ölkomponenten unter Einhalten eines laminaren Strömungsbereiches hergestellt werden. Dabei kann sowohl chargenweise wie auch kontinuierlich gemischt werden, lediglich die Mischung im laminaren Strömungsbereich muss sichergestellt sein. Die Größe der Mischapparatur spielt ebenso wenig eine Rolle, es kann konventionelle Mischtechnik eingesetzt werden. Die erfindungsgemäßen Emulsionen sind auch gut geeignet für die kontinuierliche Herstellung in Mikroprozeßapparaturen.

Trotz der recht hohen Ölkonzentration weisen die selbstemulgierenden Gelkonzentrate (G) eine erstaunlich hohe Leitfähigkeit auf: Laut H. Junginger et al., zeigen typische O/W Emulsionen unterhalb eines Wassergehaltes von 20 Gew.% keine Leitfähigkeit im mikro Siemens Bereich mehr [Aufbau und Entwicklung von Salben, Cremes und Emulsionen, Dermatikkurs II, Arbeitsgemeinschaft für Pharmazeutische Verfahrenstechnik (APV) e.V., H. Junginger, Mainz, 1983]. Anders die selbstemulgierenden Gelkonzentrate (G), die eine im mikro Siemens Bereich messbare Leitfähigkeit (> 1 mikro Siemens bei 25 °C) aufweisen von z.B. der Größenordnung 3 mikro Siemens.

Die Herstellung der selbstemulgierenden Gele ist nur in dem Sinne temperaturabhängig, dass sich die Ölkomponenten homogen mischen lassen müssen. Bei der Herstellung des Gelkonzentrates (G) muss die Ölphase flüssig sein, das bestimmt die Herstelltemperatur. Abhängig von den eingesetzten Ölkomponenten ist eine erhöhte Temperatur notwendig.

Allgemein kann man feststellen, dass die erzielbare mittlere Teilchengröße der Nanodispersionen (C) durch Selbstemulgierung des Gelkonzentrates (G) in Wasser sich proportional zur Temperatur verhält. Die Viskosität der Nanoemulsion (C) lässt sich sowohl durch den Ölgehalt, Verdünnungsgrad, als auch durch Hydrokolloide bzw. Verdicker steuern. Dünnflüssige und sprühbare (sowohl als Pumpspray wie auch als Aerosolspray einsetzbar) Dispersionen lassen sich mit einer Ölphase (O) bis max. 50 Gew. % bezogen auf die Nanoemulsion (C), bevorzugt max. 40 Gew. % bezogen auf die Nanoemulsion (C) und besonders bevorzugt max. 30 Gew. % bezogen auf die Nanodispersion (C) herstellen.

Als typische Kennwerte zur Charakterisierung der Nanodipserion (C) sind das Verhältnis Ölphase (O) zu Tensid bzw. Emulgator (I+N = E) als Kennzahl Q definiert: O/E = Q. Erfindungsgemäß liegt Q zwischen 1 und 100, bevorzugt 5 bis 50 und besonders bevorzugt 7 bis 35.

Darüber hinaus ist die aus der Laserstreulicht basierten Bestimmung der Partikelgröße unter Annahme einer sphärischen Partikelstruktur ermittelte Oberfläche der Partikel (A_{P}) wie folgt definiert: Aₚ (emul.) = k * exp (k' + E), mit k' als Stoffkonstante, in m² Oberfläche der Partikel pro Gramm Dispersion. Für die erfindungsgemäßen Nanodispersionen liegt i.d.R. Aₚ zwischen 5 und 2000, bevorzugt 10 bis 1000 und besonders bevorzugt 20 bis 800 m²/g.

In den erfindungsgemäßen Nanodispersion (C) weist die dispergierte Ölphase i.d.R. die Form kleiner Bruchstücke (Kompartimente), mit einem Median zwischen ca. 10 nm und 10 Mikrometern, bevorzugt zwischen 200 nm und 5 Mikrometer, besonders bevorzugt zwischen 300 nm und 1,5 Mikrometer und ganz besonders bevorzugt von unter einem Mikrometer auf.

Sie sind stabil in Tau-Gefrier-Zyklen (5 mal -18 bis 40 °C mit mindestens 12 h bei jeder Temperatur) und lagerstabil bei Raumtemperatur sowie bei höheren Temperaturen wie 40 und 50 °C.

Die besondere Struktur der dispergierten Ölphasenpartikel der erfindungsgemäßen Nanoemulsionen hat einen von konventionellen Emulsionen unterschiedlichen Verlauf der Trocknung zur Folge. Nimmt man die Leitfähigkeit während der Trocknung auf, so unterscheidet sich ihr Verlauf deutlich von dem konventioneller Emulsionen, und zwar insoweit, dass ein Gleichgewichtswert der Leitfähigkeit (der nicht gleich Null ist) sich schon bei deutlich kürzeren Trocknungsdauem einstellt.

Bedingt durch die besondere Struktur der dispergierten Ölpartikel ist i.d.R. ein beim Eintrocknen der Nanodispersion (C) überraschend auftretender Memoryeffekt zu beobachten: Lässt man eine Nanodispersion (C) bei 25 °C und Atmosphärendruck eintrocknen, so verdunstet das Wasser so lange bis der Zustand des ursprünglichen Gelkonzentrates (G) erreicht ist. Dieses bleibt unter den genannten Bedingungen wenigstens 24 Stunden stabil und ist, wie direkt nach der Herstellung, selbstemulgierend. Dabei stellt sich auch wieder die ursprüngliche - für das entsprechende Gelkonzentrat charakteristische - Partikelgrößenverteilung der dispergierten Ölphase ein. Dieser Vorgang lässt sich beliebig oft ohne Änderung der Partikelgrößenverteilung wiederholen. Die erfindungsgemäßen Nanodispersion (C) unterscheiden sich hinsichtlich dieses Memoryeffektes signifikant von konventionellen Emulsionen/Dispersionen, die sich bei solch einem Eintrocknungsvorgang irreversibel trennen.

Die von Emulsionen nach dem Stand der Technik abweichende innere Struktur der dispergierten Ölphasenpartikel der erfindungsgemäßen Nanoemulsionen (C) zeichnen sich durch den Aufbau eines zusammenhängenden Films bei der Trocknung aus.

Diese Eigenschaft erweist sich sowohl für Sonnenschutzformulierungen wie auch für Lacke und Farben vorteilhaft, weil hierdurch Glanz und Kratzfestigkeit deutlich erhöht werden können.

Ein besonderer Vorteil der erfindungsgemäßen Wachsdispersionen ist, dass sie mit Niedrigenergieprozessen und unter der Verwendung von 25 % und weniger Tensid als die nach dem Stand der Technik herstellbaren Wachsemulsionen hergestellt werden können. Das ist besonders für die Hydrophobierung von Oberflächen von großem Vorteil. Die Flexibilität der Emulgatorkonzentrate (A) hinsichtlich der Öl- bzw. Wachspolarität erlaubt eine optimale Anpassung der Benetzbarkeit von Oberflächen, die mit einer erfindungsgemäßen Wachsemulsion behandelt worden sind.

Die erfindungsgemäßen Wachsnanoemulsionen erlauben darüber hinaus auch die zielgerichtete Herstellung von Wachspartikeln im Nanometermaßstab (< 500 nm), wobei eine gezielte Steuerung der Polarität der Wachspartikel, und zwar von äußerst hydrophob bis, wenn es gewünscht ist, hydrophil (durch geeignete Auswahl der Wachse und der mit ihnen gemischten flüssigen Ölkomponenten) möglich ist. Eine Anpassung der Affinität zu anderen Oberflächen ist durch die erfindungsgemäßen Wachs-Nanoemulsionen ebenfalls möglich, da die Auswahl von quaterniesierten Komponenten in der Ölphase ebenso wie die Verwendung von kationischen Tensiden neue Möglichkeiten dazu schaffen.

Bei dem ionischen Tensid I, kann es sich sowohl um anionische, kationische als auch um amphotere Tenside handeln, die entweder einzeln oder in Kombinationen eingesetzt werden können. Sich gegenseitig neutralisierende und dann ausfallende Kombinationen von Tensiden sind nicht geeignet.

Anionische Tenside in (A), die spontan bei Raumtemperatur dazu neigen, in Konzentrationsbereichen < 20 % lamellare Phasen in Wasser auszubilden, wie zum Beispiel Natrium Lauroyllactylat (INCI Nomenklatur), Natrium Cetylsulfat, Natrium Stearoyllactylat (INCI Nomenklatur), werden insbesondere in Kombination mit anderen Tensiden verwendet und sind für den alleinigen Einsatz i.d.R. nicht geeignet.

Der Gehalt an Polyol im Emulgatorkonzentrat (A) liegt zwischen 0 und 80 Gew.%, bevorzugt zwischen 0,1 und 75 Gew.% besonders bevorzugt bei 10 bis 60 Gew.% und ganz besonders bevorzugt bei 20 bis 50 Gew.%, wobei bei Verwendung nur eines Tensidtyps (I oder N) die geeignete Konzentration vorzugsweise größer 30 Gew.% beträgt.

Ohne Verwendung von Polyolen ist die Stabilität der Nanoemulsionen jedoch im Tau-Gefrier-Zyklus oft unbefriedigend. Auch der Einsatz höherer Elektrolytkonzentrationen bedingt die Anwesenheit von Polyolen. Die Polyole weisen vorzugsweise 2 bis 1000 Kohlenstoffatome im (ggf. verzweigten) Kohlenwasserstoffrest und vorzugsweise 2 bis 50, bevorzugt 2 bis 20, besonders bevorzugt 2 bis 10 und ganz besonders bevorzugt 3 bis 6, Hydroxylgruppen auf. Geeignete Polyole sind z.B. Alkylenglykole wie Ethylen-, Propylen-, Butylen-, Pentylen- sowie Hexylenglykol sowie ihre jeweiligen Isomeren (z.B. Neopentylglykol), wie auch Triole, wie Glycerin, und höhere, wie Trimethylolpropan, Pentaerythrit, Polyglycerine, Glucoside und Polyglucoside, Saccharide und ihre jeweiligen Alkylderivate und deren Mischungen. Geeignet sind auch Polyvinylalkohole und Polyfructose.

Glycerin hat sich als das vielseitigste Polyol erwiesen, doch sind eine ganze Reihe anderer Verbindungen mit mehren Hydroxylgruppen auch geeignet, wobei dem Glycerin ähnliche Verbindungen wie polare Glykole besonders geeignet sind. Ethylenglykol, Propylenglykol, Butylenglykol oder Pentylenglykol oder Derivate des Glycerins aber auch PEG Derivate sind besonders geeignet.

Lactose, Dextrose, Propylenoxid Block-Copolymere ebenso wie aminofunktionalisierte Propylenoxid Derivate sind recht gut geeignet, während Sorbitol nur mit einer gewissen Einschränkung der Emulgatoreffizienz verwendbar ist, d.h. bei der Verwendung von Sorbitol ist Q < 15 zu erreichen.

Die Herstellung des Emulgatorkonzentrates A erfolgt durch die Mischung der Komponenten, wobei es keine Einschränkungen hinsichtlich der Mischwerkzeuge und Temperaturbereiche gibt.

Als Ölphase bzw. die Ölphase bildende Ölkomponenten im Sinne der Erfindung werden Stoffe mit einer Grenzflächenspannung zu demineralisiertem Wasser bei 25 °C von größer als 3 mN*m⁻¹, bevorzugt 5 bis 69 mN*m⁻¹, verstanden. Diese haben in der Summe bei 25°C und darunter eine wachsartige feste Konsistenz.

Besonders geeignete Ölkomponenten, auf die die obengenannte Definition zutrifft, sind Paraffine, Ester, Silicone, auch Mischester zwischen Siliconen bzw. funktionalisierten Siliconen und organischen Komponenten jedoch insbesondere Glyceride und ihre Derivate. Daneben genannt sind auch Destillierrückstände der Petrochemie, Gatschen und Bitumen.

Der Begriff "selbstemulgierend" beschreibt einen spontanen Emulsionsprozess, der bei Kontakt des selbstemulgierenden O/W Gels mit Wasser abläuft. D.h. bringt man das Gel (G) mit zusätzlichem Wasser in Kontakt, emulgiert sich die Ölphase, bisweilen nach einer Initialisierungsperiode von maximal ein paar Minuten in Form kleiner Bruchstücke, mit einem Median zwischen ca. 100 nm und 10 Mikrometern, bevorzugt zwischen 200 nm und 5 Mikrometer, besonders bevorzugt zwischen 300 nm und 1,5 Mikrometer und ganz besonders bevorzugt von unter einem Mikrometer ohne zusätzliches Rühren oder andere mechanische Unterstützung innerhalb von wenigen Minuten bis mehreren Stunden selbst. Die spontane Emulsion führt zu stabilen O/W Emulsionen.

Der Gehalt an Ölphase in der Nanodispersion (C) liegt zwischen 0.1 und 70 Gew% bevorzugt 5 bis 60 % und besonders bevorzugt 10 bis 50 Gew%.

Bei Tensidmischungen (I) plus (N) sind Gewichts-Verhältnisse von (I) zu (N) zwischen 0,01 zu 3 bis 3 zu 0,01 besonders geeignet. Es muss jedoch nur jeweils ein Tensid (I) oder (N) vorhanden sein, bevorzugt ist es jedoch eine Kombination von (I) und (N) im Emulgatorkonzentrat (A) einzusetzen. Bei Verwendung unterschiedlicher Tensidtypen werden stabilere Nanodispersion und auch geringere erzielbare Teilchengrößen erhalten.

Nichtionische Tenside oder Tensidkombinationen mit einen HLB (berechnet nach Griffin, J. Soc. Cosmet. Chem. 1, (1949) 311-326) größer gleich 10 sind insbesondere geeignet, sei es allein oder weiter bevorzugt in Kombination mit einem ionischen Tensid.

Weiterhin sind nichtionische Tenside mit besonders hoher Polarität geeignet, auch für den alleinigen Einsatz in (A), beispielsweise Diamidethoxylate basierend auf C12/C14 oder C8/C10 Diamiden mit mindestens 30 Ethylenglykoleinheiten.

Nachfolgend seien Beispiele für geeignete Tenside aufgeführt:

Geeignete nichtionische Tenside umfassen:
Tenside, die mit einem Alkoholrest terminieren, wie z. B.:
   (1.a) C₁- bis C₄- Alkoxylate, einschließlich deren Mischungen, von verzweigten oder linearen, gesättigten oder ein- bis dreifach ungesättigten C10- bis C22- Alkoholen, insbesondere C12-bis C18-Fettalkoholethoxylate, ethoxylierte Wollwachsalkohole, Polyethylenglycolether der allgemeinen Formel R-O-(-CH₂-CH₂-O-)ₙ-R', z. B. Fettalkoholethoxylate aus der Gruppe polyethoxylierter bzw. polypropoxylierter bzw. polyethoxylierter und polypropoxylierter Produkte, umfassend, Monoalkohole wie ethoxylierte Stearylalkohole, Cetylalkohole, Cetylstearylalkohole und andere Polyglykole wie Ethylenoxid-Propylenoxid Block-Co-Polymere, und Polyvinylalkohole sowie ethoxylierte Sorbitanester, Cholesterinethoxylate oder Alkylpolyglycoside mit Polymerisationsgraden größer 1 und N-Alkylpyrrolidonderivate.
   (1.b) Fettalkoholpropoxylate der allgemeinen Formel R-O-(-CH₂-CH(CH₃)-O-)ₙ-H, Polypropylenglycolether der allgemeinen Formel R-O-(-CH₂-CH(CH₃)-O-)ₙ-R', propoxylierte Wollwachsalkohole, veretherte Fettsäurepropoxylate R-COO-(-CH₂-CH(CH₃)-O-)ₙ-R', veresterte Fettsäurepropoxylate der allgemeinen Formel R-COO-(-CH₂-CH(CH₃)-O-)ₙ-C(O)-R', Fettsäurepropoxylate der allgemeinen Formel R-COO-(-CH₂-CH(CH₃)-O-)ₙ-H, Polypropylenglycolglycerinfettsäureester, propoxylierte Sorbitanester, Cholesterinpropoxylate, propoxylierte Triglyceride, Alkylethercarbonsäuren der allgemeinen Formel R-O-(-CH₂-CH(CH₃)O-)ₙ-CH₂-COOH, Fettalkoholethoxylate(X)/propoxylate(Y) der allgemeinen Formel R-O-Xₙ-Yₘ-H, Polypropylen(Y)/ethylen(X)glycolether der allgemeinen Formel R-O-XₙYₘ-R', veretherte Fettsäurepropoxylate(Y)/ethoxylate(X) der allgemeinen Formel R-COO-XₙYₘ-R' und/oder Fettsäureethoxylate(X)/propoxylate(Y) der allgemeinen Formel R-COO-XₙYₘ-H (X,Y statistisch oder in Bockstruktur bei beliebige Reihenfolge der Blöcke).
   (1.c) Monoglycerinester gesättigter und/oder ungesättigter, verzweigter und/oder unverzweigter Alkancarbonsäuren einer Kettenlänge von 8 bis 32, insbesondere 12 bis 18 C-Atomen, Diglycerinester gesättigter und/oder ungesättigter, verzweigter und/oder unverzweigter Alkancarbonsäuren einer Kettenlänge von 8 bis 32, insbesondere 12 bis 18 C-Atomen, Tri- bis Decaglycerinester gesättigter und/oder ungesättigter, verzweigter und/oder unverzweigter Alkancarbonsäuren einer Kettenlänge von 8 bis 32, insbesondere 12 bis 18 C-Atomen, Monoglycerinether gesättigter und/oder ungesättigter, verzweigter und/oder unverzweigter Alkohole einer Kettenlänge von 8 bis 32, insbesondere 12 bis 18 C-Atomen, Di-, tri- bis deca-glycerinether gesättigter und/oder ungesättigter, verzweigter und/oder unverzweigter Alkohole einer Kettenlänge von 8 bis 32, insbesondere 12 bis 18 C-Atomen, Propylenglycolester gesättigter und/oder ungesättigter, verzweigter und/oder unverzweigter Alkancarbonsäuren einer Kettenlänge von 8 bis 32, insbesondere 12 bis 18 C-Atomen sowie Sorbitanester gesättigter und/oder ungesättigter, verzweigter und/oder unverzweigter Alkancarbonsäuren einer Kettenlänge von 8 bis 32, insbesondere 12 bis 18 C-Atomen. Konkrete Beispiele für diese Gruppe sind Glycerylmonostearat, Glycerylmonoisostearat, Glycerylmonomyristat, Glycerylmonooleat, Diglycerylmonostearat, Diglycerylmonoisostearat, Propylenglycolmonostearat, Propylenglycolmonoisostearat, Propylenglycolmonocaprylat, Propylenglycolmonolaurat, Sorbitanmonoisostearat, Sorbitanmonolaurat, Sorbitanmonocaprylat, Sorbitanmonoisooleat, Saccharosedistearat, Cetylalkohol, Stearylalkohol, Arachidylalkohol, Behenylalkohol, Isobehenylalkohol, Selachylalkohol, Chimylalkohol, Polyethylenglycol-2-stearylether (Steareth-2), Glycerylmonolaurat, Glycerylmonocaprinat, Glycerylmonocaprylat, Alkylphenolpolyglycolether (z. B. Triton X), Glycerylmono- und diester der Guerbetcarbonsäuren von C12 bis C 32, bevorzugt C12 bis C 24, Zuckerderivate (Ester und/oder Ether von Glucose, Saccharose und anderen Zuckern), Kondensationsprodukte von aliphatischen Alkoholen mit 8 bis 18 Kohlenstoffatomen, entweder in geradkettiger oder verzweigtkettiger Konfiguration, mit Ethylenoxid, z. B. ein Kokosnussalkohol-Ethylenoxid-Kondensat mit 10 bis 30 Mol Ethylenoxid pro Mol Kokosnussalkohol, wobei die Kokosnussalkoholfraktion 10 bis 14 Kohlenstoffatome aufweist.
   (1.d) Alkylpolysaccharid(APS)-Tenside (zum Beispiel Alkylpolyglycoside), gegebenenfalls kann eine Polyalkylenoxid-Gruppe, die die hydrophoben und hydrophilen Reste verknüpft, vorliegen; und die C8- bis C32-Alkylgruppe, bevorzugt C8 bis C18, (d. h. der hydrophobe Rest) kann gesättigt oder ungesättigt, verzweigt oder unverzweigt und unsubstituiert oder (beispielsweise mit Hydroxy oder cyclischen Ringen) substituiert sein,
   (1.e) Polyethylenglykol(PEG)-Glyceryl-Fettester, wie jene der Formel R(O)OCH₂CH(OH)CH₂(OCH₂CH₂)nOH, worin n im Durchschnitt 5 bis 200, vorzugsweise etwa 20 bis etwa 100 ist, und R ein aliphatisches Hydrocarbonyl mit etwa 8 bis etwa 20 Kohlenstoffatomen ist, wie z. B. Polyethylenglycol(20)glyceryllaurat, Polyethylenglycol(21)glyceryllaurat, Polyethylenglycol(22)glyceryllaurat, Polyethylenglycol(23)glyceryllaurat, Polyethylenglycol(6)glycerylcaprat/caprinat, Polyethylenglycol(20)glyceryloleat, Polyethylenglycol(20)glycerylisostearat und/ oder Polyethylenglycol(18)glyceryloleat/cocoat,
   (1.f) ethoxylierte Cholesterinderivate wie Polyethylenglycol(30)cholesterylether, oder auch Polyethylenglycol(25)sojasterol.
   (1.g) ethoxylierte Triglyceride wie Polyethylenglycol-Nachtkerzen-Glyceride und Polyethylenglycol-Kokos-, Soja-, Babassu- und Mandelölglyceride.
   (1.h) Sorbitanester aus der Gruppe Polyethylenglycol(20)sorbitanmonolaurat, Polyethylenglycol(20)sorbitanmonostearat, Polyethylenglycol(20)sorbitanmonoisostearat, Polyethylenglycol(20)sorbitanmonopalmitatund/oderPolyethylenglycol(20)sorbitanmonoo leat.
(2) Tenside, die mit Carbonsäuren terminieren, wie z. B.:
   (2.a) C2- bis C4- Alkoxylate, einschließlich deren Mischungen, der Mono- und Difettsäureglyceride, der Fettsäureethoxylate der allgemeinen Formel R-COO-(-CH₂-CH₂-O-)n-H, veretherte Fettsäureethoxylate der allgemeinen Formel R-COO-(-CH₂-CH₂-O-)n-R', veresterte Fettsäureethoxylate der allgemeinen Formel R-COO-(-CH₂-CH₂-O-)n-C(O)-R', Partialfettsäureester und Fettsäureester mehrwertiger Alkohole und deren ethoxylierte Derivate wie Polyethylenglycolglycerinfettsäureester, Polyethylenglycolstearylether mit 12 bis 20 Polyethylenglycol-Einheiten, Polyethylenglycolisostearylether mit 12 bis 20 Polyethylenglycol-Einheiten, der Polyethylenglycololeate mit 12 bis 20 Polyethylenglycol-Einheiten, Glycerylmonostearate, Sorbitanstearate, Glycerylstearylcitrate, Sucrosestearate, ethoxylierte Triglyceride, Polyoxyethylensorbitolfettsäureester, Fettsäureamide, Fettsäurealkanolamide, veretherte Fettsäurepropoxylate der allgemeinen Formel R-COO-(-CH₂-CH(CH₃)-O-)ₙ-R', veresterte Fettsäurepropoxylate der allgemeinen Formel R-COO-(-CH₂-CH(CH₃)-O-)ₙ-C(O)-R' und
   (2.b) Alkylethercarbonsäuren der allgemeinen Formeln R-O-(-CH₂-CH₂-O-)ₙ-CH₂-COOH und R-O-(-CH₂-CH₂-(CH₃)-O-)ₙ-CH₂-COOH, worin n bzw. der Alkoxylierungsgrad im Durchschnitt jeweils eine Zahl von 5 bis 30, insbesondere 8 bis 18, ist. Ebenso geeignet sind gemischt alkoxylierte Ethercarbonsäure der allgemeinen Formeln R-O-(-CH₂-CH₂-O-)n-(-CH₂-CH₂-(CH₃)-O-)m-CH₂-COOH, worin n und m bzw. der Alkoxylierungsgrad jeweils eine Zahl von 5 bis 30, insbesondere 8 bis 18, sind. R ist linear oder verzweigt, gesättigt bis dreifach ungesättigt mit C8 bis C 32, bevorzugt C 8 bis C18. Zur Neutralisation werden bevorzugt Alkali- und Erdalkali sowie Alkanolamine eingesetzt.
(3) Tenside mit anderen Eigenschaften, wie z. B.:
   (3.a) Polyethylenoxid-Kondensate von Alkylphenolen, die z. B. Kondensationsprodukte sind von Alkylphenolen mit einer Alkylgruppe von 6 bis 20 Kohlenstoffatomen in entweder einer linearen oder verzweigten Konfiguration, mit Ethylenoxid, wobei das Ethylenoxid in Mengen von gleich etwa 10 bis etwa 60 Mol Ethylenoxid pro Mol Alkylphenol vorhanden ist,
   (3.b) Kondensationsprodukte (Blockstruktur oder statistisch verteilt) von Ethylenoxid mit dem Produkt aus der Reaktion von Propylenoxid und Ethylendiaminen; N,N'-Diacylalkylendiaminalkoxylate, ethoxylierte Fettamine und alkoxylierte N-Acylamide wie auch N-Acyl-N-Alkylamidalkoxylate sind ebenfalls geeignet,
   (3.c) langkettige tertiäre Aminoxide der Formel [RR'R"N-O], worin R einen Alkyl-, Alkenyl- oder Monohydroxyalkylrest von 8 bis 18 Kohlenstoffatomen, von 0 bis 10 Ethylenoxideinheiten und von 0 bis 1 Glyceryleinheit enthält, und R' und R" 1 bis 3 Kohlenstoffatome und 0 bis 1 Hydroxygruppen enthalten, z. B. Methyl-, Ethyl-, Propyl-, Hydroxyethyl- und/oder Hydroxypropylreste,
   (3.d) langkettige tertiäre Phosphinoxide der Formel [RR'R"P-O], worin R einen Alkyl-, Alkenyl-oder Monohydroxyalkylrest im Bereich von etwa 8 bis etwa 18 Kohlenstoffatomen Kettenlänge, 0 bis 10 Ethylenoxideinheiten und von 0 bis 1 Glyceryleinheit enthält, und R' und R" jeweils Alkyl- oder Monohydroxyalkylgruppen mit 1 bis 3. Kohlenstoff-atomen sind und
   (3.e) langkettige Dialkylsulfoxide, enthaltend einen kurzkettigen Alkyl- oder Hydroxyalkylrest von 1 bis 3 Kohlenstoffatomen (üblicherweise Methyl) und eine lange hydrophobe Kette, welche Alkyl-, Alkenyl-, Hydroxyalkyl- oder Ketoalkylreste mit 8 bis 20 Kohlenstoffatomen, 0 bis 10 Ethylenoxideinheiten und 0 bis 1 Glyceryleinheit enthält,
   (3.f) nichtionische Geminitenside, auch Dimer- oder Zwillingstenside genannt, die dadurch gekennzeichnet sind, dass zwei Tensideinheiten bestehend aus einer hydrophoben Gruppe und einer hydrophilen Gruppe durch einen Spacer nahe der hydrophilen Gruppe miteinander verbunden sind. Beispielsweise sind N,N'-Dialkyl-N,N'-dialkoxylate besonders geeignet,
   (3.g) Sorbitanfettsäureester, Polyoxyethylensorbitanfettsäureester, Lactobionsäureamide, Gluconamide, N-Methylgluconamide mit einem Alkylrest von C6 bis C32, bevorzugt C8 bis C 18, linear oder verzweigt, gesättigt oder ungesättigt,
   (3.h) in Kombination mit einem sehr polaren anionischen Tensid, wie Alkylethersulften oder Alkylsulfaten oder kurzkettigen Sulfosuccinaten, lassen sich auch kurzkettige, bevorzugt verzweigte Fettalkohole mit C6- bis C15-, besonders bevorzugt C8- bis C13- Resten einsetzen. Ganz besonders geeignet sind Alkohole, die unter dem Markennamen Safol 23, Marlipal 013, Isalchem 123 und Isalchem 125, sowie Marlipal 031 angeboten werden.

Besonders geeignet sind (INCI Namen) Sodium Laureth-Sulfate, MIPA- und TIPA-Laureth Sulfate jeweils mit 2 Ethylenglycoleinheiten wie auch die mit 3 Ethylenglykoleinheiten versehenen Analoga.

Eine weitere Besonderheit in Kombination mit sehr polaren anionischen Tensiden (wie oben beschrieben) bilden Alkanollactate von bevorzugt monoverzweigten Oxo-Alkoholen wie das C12 bis C13 Alkyllactat (INCI Name) Cosmacol ELI. Geeignet ist ebenfalls das C12-C15 Analogen.

### Anionische Tenside

(1) Fettsäuren mit 8 bis 30 Kohlenstoffatomen, Glycerin- Mono- und Diester gesättigter und/oder ungesättigter, verzweigter und/oder unverzweigter Alkancarbonsäuren einer Kettenlänge von 8 bis 32, insbesondere 12 bis 18 C-Atomen, Diglycerinester gesättigter und/oder ungesättigter, verzweigter und/oder unverzweigter Alkancarbonsäuren einer Kettenlänge von 8 bis 32, insbesondere 12 bis 18 C-Atomen, Monoglycerinether gesättigter und/oder ungesättigter, verzweigter und/oder unverzweigter Alkohole einer Kettenlänge von 8 bis 32, insbesondere 12 bis 18 C-Atomen, Diglycerinether gesättigter und/oder ungesättigter, verzweigter und/oder unverzweigter Alkohole einer Kettenlänge von 8 bis 32, insbesondere 12 bis 18 C-Atomen, Propylenglycolester gesättigter und/oder ungesättigter, verzweigter und/oder unverzweigter Alkancarbonsäuren einer Kettenlänge von 8 bis 32, insbesondere 12 bis 18 C-Atomen sowie Sorbitanester gesättigter und/oder ungesättigter, verzweigter und/oder unverzweigter Alkancarbonsäuren einer Kettenlänge von 8 bis 32, insbesondere 12 bis 18 C-Atomen, die ganz oder teilweise mit Milch- und Zitronen- oder Weinsäure verestert worden sind und darüber hinaus noch teilweise neutralisiert sein können (Imwitor 380, 375, 377, 372 P). Ebenso zählen dazu unvollständig veresterte Oligo- oder Polycarbonsäuren, dazu gehören auch Fruchtsäuren (Zitronensäure, Weinsäure, Äp-fel- und Apfelsäure) mit ihren Mono- oder Diestern von linearen oder verzweigten, gesättigten oder einfach oder mehrfach ungesättigten C6 bis C40 Alkoholen deren verbleibende Carbonsäuregruppe anschließend neutralisiert worden sind. Zum Neutralisieren finden Natrium, Kalium, Monoethanolammonium und Monoisopropanolammonium Kationen bevorzugt Verwendung. Ebenso gehören Bernstein- und Adipinsäure, Maleinsäure, Fumarsäure dazu.
(2) Alkylethersulfate bzw. die diesen Sulfaten zugrundeliegenden Säuren der allgemeinen Formel R-O-(C₂H₄O)ₓ(-CH₂-CH(CH₃)-O-)ₙ-SO₃-H und Alkyl- und Alkylethersulfate mit den jeweiligen Formeln ROSO₃M und RO(C₂H₄O)ₓSO₃M, worin R Alkyl von etwa 8 bis etwa 32, vorzugsweise 12 bis 18 Kohlenstoffatomen ist, und linear oder einfach bis mehrfach verzweigt sein kann, x 1 bis 10 ist, und M ein Kation ist, wie Ammonium, Alkanolamine (z. B. Triethanolamin, Mono- und Triethanol und Mono- und Triisopropanolamin), einwertige Metallkationen (Natrium und Kalium) und mehrwertige Metallkationen, wie (Magnesium und Calcium). Die Alkylethersulfate werden typischerweise als Kondensationsprodukte von Ethylenoxid und einwertigen Alkoholen mit 8 bis 24 Kohlenstoffatomen hergestellt. Die Alkohole können aus Fetten, z. B. Kokosnussöl oder Talg, abgeleitet sein oder können synthetisch sein. Laurylalkohol und geradkettige Alkohole, welche aus Kokosnussöl abgeleitet sind, ebenso Oxoalkohole mit C12-C13, einfach verzweigt und C13 Alkylketten auf Basis von Buten-Trimerisation oder Propen-Tetramerisation, werden hierin bevorzugt.
   Derartige Alkohole werden mit zwischen 0 und 10 und insbesondere 3 molaren Anteilen Ethylenoxid umgesetzt, und die resultierende Mischung von molekularen Spezies mit beispielsweise einem Durchschnitt von 3 Mol Ethylenoxid pro Mol Alkohol wird sulfatiert und neutralisiert. Konkrete Beispiele von Alkylethersulfaten sind die Natrium- und Ammoniumsalze von Kokossnussalkyltriethylenglykolethersulfat, Talgalkyltriethylenglykolethersulfat und Talgalkylhexaoxyethylensulfat oder von Succinaten, wie z. B. Dinatrium-N-octadecylsulfosuccinnat, Dinatriumlaurylsulfosuccinnat, Diammoniumlaurylsulfosuccinnat, Tetranatrium-N-(1,2-dicarboxyethyl)-N-octadecylsulfosuccinnat, oder die Diamylester der Natriumsulfobernsteinsäure, Dihexylester der Natriumsulfobernsteinsäure und Dioctylester der Natriumsulfobernsteinsäure.
   Weiter bevorzugte Alkylethersulfate sind diejenigen, umfassend eine Mischung von individuellen Verbindungen, wobei die Mischung eine durchschnittliche Alkylkettenlänge von 10 bis 18, bevorzugt 12 bis 16 Kohlenstoffatomen und einen durchschnittlichen Ethoxylierungsgrad von 1 bis 10, bevorzugt 1 bis 4 Mol Ethylenoxid aufweist. Beispiele sind, Ammoniumlaurethsulfat, Triethylaminlaurethsulfat, Triethanolaminlaurethsulfat, Monoethanolaminlaurethsulfat, Diethanolaminlaurethsulfat, Laurinmonoglycerid-Natriumsulfat, Natriumlaurethsulfat, Kaliumlaurylsulfat, Kaliumlaurethsulfat, Natriumlaurylsarcosinat, Natriumlauroylsarcosinat, Laurylsarcosin, Cocoylsarcosin, Ammoniumcocoylsulfat, Ammoniumlauroylsulfat, Natriumcocoylsulfat, Natriumlauroylsulfat, Kaliumcocoylsulfat, Triethanolaminlaurylsulfat, Triisopropylaurylsulfat, Monoethanolamincocoylsulfat, Monoethanolaminlaurylsulfat, Natriumtridecylbenzolsulfonat und Natriumdodecylbenzolsulfonat und Natriumlaurethsulfat, sowie Natrium und Kalium Monoethanolamin, Monoisopropanolamin Salze der C12 bis C32 Guerbetsäuren (erzeugen keine flüssigkristallinen Phasen und können allein eingesetzt werden). Es ist bevorzugt Alkylsulfate nicht einzusetzen.
(3) Andere geeignete anionische Tenside sind die wasserlöslichen Salze von organischen Schwefelsäurereaktionsprodukten (Sulfonate) der allgemeinen Formel [R'-SO₃-M], worin R' gewählt wird aus der Gruppe, bestehend aus linearen oder verzweigten, gesättigten aliphatischen Kohlenwasserstoffresten mit 8 bis 24, vorzugsweise 10 bis 18 Kohlenstoffatomen und wobei M ein Kation ist. Beispiele solcher Tenside sind die Salze eines organischen Schwefelsäurereaktionsproduktes eines Kohlenwasserstoffs der Methan-Reihe, einschließlich Iso-, Neo- und n-Paraffinen mit 8 bis 24 Kohlenstoffatomen, vorzugsweise 12 bis 18 Kohlenstoffatomen, und einem Sulfonierungsmittel, z. B. SO₃, H₂SO₄, Oleum erhalten gemäß bekannten Sulfonierungsverfahren, einschließlich Bleichen und Hydrolyse. Bevorzugt werden sulfonierte Alkalimetall- und Ammonium-C₁₀₋₁₈-n-Paraffine.
(4) Weitere geeignete anionische Tenside sind die Reaktionsprodukte von Fettsäuren, verestert mit Isothionsäure und neutralisiert mit Natriumhydroxid, worin die Fettsäuren beispielsweise aus Cocosnußöl abgeleitet sind; Natrium oder Kaliumsalze von Fettsäureamiden von Methyltaurid, worin die Fettsäuren beispielsweise aus Kokosnussöl abgeleitet sind.
(5) Mono-, Di- und Trialkylphosphosäureester und deren Alkoxylate (Ethoxylate, Propoxylate und Mischvarianten).
(6) Olefinsulfonate mit etwa 10 bis etwa 24 Kohlenstoffatomen, die durch Sulfonierung von alpha-Olefinen mittels unkomplexiertem Schwefeltrioxid gebildet sind, wobei die Säure-Reaktionsmischung so neutralisiert wurde, dass jegliche gebildete Sulfone, unter Bildung der entsprechenden Hydroxyalkansulfonate hydolysiert werden. Die Alpha-Olefine, aus denen die Olefinsulfonate abgeleitet werden, sind vorzugsweise geradkettige Mono-Olefine mit 12 bis 24 Kohlenstoffatomen, vorzugsweise 14 bis 16 Kohlenstoffatomen. Zusätzlich zu den echten Alkensulfonaten und einem Anteil Hydroxyalkansulfonaten können die Olefinsulfonate kleinere Mengen anderer Materialien enthalten, wie Alkendisulfonate, was von den Reaktionsbedingungen, dem Verhältnis der Reaktanten, der Natur der Ausgangsolefine und Verunreinigungen im Olefinausgangsmaterial und Nebenreaktionen während des Sulfonierungsverfahren abhängig ist.
(7) Eine weitere Klasse der anionischen Tensiden sind die beta-Alkyloxyalkansulfonate. Diese Tenside weisen die folgende Formel auf: 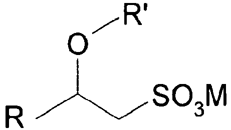 worin R eine geradkettige Alkylgruppe mit 6 bis 20 Kohlenstoffatomen ist, R' eine Niederalkylgruppe mit 1 (bevorzugt) bis 3 Kohlenstoffatomen ist, und M ein wasserlösliches Kation, wie hierin obenstehend beschrieben, ist. Als ethoxylierte Alkylethercarbonsäure bzw. deren Salz kann vorteilhaft das Natriumlaureth-11-carboxylat verwendet werden.
(8) Eine weitere geeignete Klasse von anionischen Tensiden sind anionische Geminitenside, die dadurch gekennzeichnet sind, dass zwei Tensideinheiten bestehend aus einer hydrophoben Gruppe und einer hydrophilen Gruppe durch einen Spacer nahe der hydrophilen Gruppe miteinander verbunden sind. In der Patentschrift DE 199 43 668 und DE 195 05 368 werden besonders geeignete Geminitenside ausführlich beschrieben. Ganz besonders geeignet sind die sulfatierten, carboxymethylierten und/oder phosphatierten und anschließend neutralisierten Derivate der Alkylen- N, N'-Diacyl-N, N'-dialkoxylate, sowie der Diacylen-N,N'-Dialkyl-N,N'-dialkoxylate.

### Amphotere und zwitterionische Tenside

Als geeignete amphotere Tenside seien genannt Alkylaminoalkancarbonsäuren, Betaine, Sulfobetaine und Imidazolinderivate. Amphotere Tenside schließen weiterhin die Derivate von aliphatischen sekundären und tertiären Aminen ein, in denen der aliphatische Rest linear oder verzweigt ist und worin einer der aliphatischen Substituenten 8 bis 18 Kohlenstoffatome enthält, und einer eine anionische Wasserlöslichkeit vermittelnde Gruppe, z. B. Carboxy, Sulfonat, Sulfat, Phosphat oder Phosphonat, enthält. Alkylamidoamphoacetate, Alkylamidoamphodiacetate sind ebenfalls geeignet. Zwitterionische Tenside, die Derivate von aliphatischen quaternären Ammonium-, Phosphonium- und Sulfoniumverbindungen einschließen, in denen die aliphatischen Reste linear oder verzweigt sein können und worin einer der aliphatischen Substituenten 8 bis 18 Kohlenstoffatome enthält, und einer eine anionische Gruppe, z. B. Carboxy, Sulfonat, Sulfat, Phosphat oder Phosphonat, enthält. Eine allgemeine Formel für diese Verbindungen ist 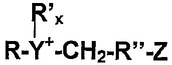 worin R einen Alkyl-, Alkenyl- oder Hydroxyalkylrest von 8 bis 18 Kohlenstoffatomen, 0 bis 10 Ethylenoxid-Gruppen und 0 bis 1 Glyceryleinheit(en) enthält; Y gewählt wird aus der Gruppe, bestehend aus Stickstoff-, Phosphor- und Schwefelatomen; R' eine Alkyl- oder Monohydroxyalkylgruppe mit 1 bis 3 Kohlenstoffatomen ist; X 1 ist, wenn Y ein Schwefelatom ist, und 2 ist, wenn Y ein Stickstoff- oder Phosphoratom ist; R" ein Alkylen oder Hydroxyalkylen mit 1 bis 4 Kohlenstoffatomen ist, und Z ein Rest ist, gewählt aus der Gruppe, bestehend aus Carboxylat-, Sulfonat-, Sulfat-, Phosphonat- und Phosphatgruppen.

Beispiele von amphoteren und zwitterionischen Tensiden schließen auch Sultaine und Amidosultaine ein. Sultaine und Amidosultaine können als schaumverstärkende Tenside, welche gegenüber dem Auge mild sind, in teilweisem Ersatz für die anionischen Tenside verwendet werden. Sultaine, einschließlich Amidosultainen, schließen z. B. Cocosdimethylpropylsultain, Stearyldimethylpropylsultain, Lauryl-bis-(2-hydroxyethyl)propylsultain und die Amidosultaine, z. B. Cocosamidodimethylpropylsultain, Stearylamidodimethylpropylsultain, Laurylamidobis-(2-hydroxyethyl)propylsultain ein. Bevorzugt werden Amidohydroxysultaine, wie die C₁₂-C₁₈-Hydrocarbylamidopropylhydroxysultaine speziell C₁₂-C₁₄-Hydrocarbyl-amidopropylhydroxysultaine, z. B. Laurylamidopropylhydroxysultaine und Cocamidopropylhydroxysultaine.

Weitere geeignete amphotere Tenside sind die Aminoalkanoate der Formel R-NH(CH₂)nCOOM, die Iminodialkanoate der Formel R-N[(CH₂)ₘCOOM]₂ und Mischungen hiervon; worin n und m Zahlen von 1 bis 4 sind, R C₈-C₂₂-Alkyl oder Alkenyl und M Wasserstoff, Alkalimetall, Erdalkalimetall, Ammonium oder Alkanolammonium ist.

Beispiele von geeigneten Aminoalkanoaten schließen n-Alkylaminopropionate und n-Alkyliminodipropionate ein, wofür Beispiele N-Lauryl-beta-aminopropionsäure oder deren Salze und N-Lauryl-beta-imino-dipropionsäure oder deren Salze sind. Andere geeignete amphotere Tenside sind gekennzeichnet durch die Formel: 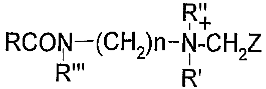 worin R C₈- bis C₂₂- Alkyl oder -Alkenyl, vorzugsweise C₁₂ - C₁₆ ist, R' Wasserstoff oder CH₂CO₂M ist, R" CH₂CH₂OH oder CH₂CH₂OCH₂CH₂COOM ist, R'" Wasserstoff, CH₂CH₂OH oder CH₂CH₂OCH₂CH₂COOM ist, Z CO₂M oder CH₂CO₂M ist, n 2 oder 3, vorzugsweise 2 ist, M Wasserstoff oder ein Kation ist, wie Alkalimetall (z. B. Lithium, Natrium, Kalium), Erdalkalimetall (Beryllium, Magnesium, Calcium, Strontium, Barium) oder Ammonium.

Beispiele von Tensiden der obenstehenden Formel sind Monocarboxylate und Dicarboxylate. Geeignete Beispiele schließen Cocoamphocarboxypropionat, Cocoamphocarboxypropionsäure, Cocoamphocarboxyglycinat (alternativ als Cocoamphodiacetat bezeichnet) und Cocoamphoacetat ein.

Handelsübliche amphotere Tenside schließen diejenigen ein, welche unter den Handelsnamen MIRANOL C2M CONC. N.P., MIRANOL C2M CONC. O.P., MIRANOL C2M SF, MIRANOL CM SPECIAL (Miranol, Inc.); ALKATERIC 2CIB (Alkaril Chemicals); AMPHOTERGE W-2 (Lonza, Inc.); MONATERIC CDX-38, MONATERIC CSH-32 (Mona Industries); REWOTERIC AM-2C (Rewo Chemical Group) und SCHERCOTERIC MS-2 (Scher Chemicals) vertrieben werden.

Geeignete zwitterionische (Betain-)Tenside sind z.B. solche die durch nachstehende Formel repräsentiert sind: 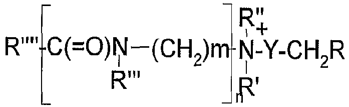 worin
- R: COOM oder CH(OH)-CH₂SO₃M ist und
- R': ein Niederalkyl. oder Hydroxyalkyl ist,
- R": ein Niederalkyl oder Hydroxyalkyl ist,
- R"': ein Vertreter ist, gewählt aus der Gruppe, bestehend aus Wasserstoff und Niederalkyl,
- R"": ein höheres Alkyl oder Alkenyl ist,
- Y: ein Niederalkyl, vorzugsweise Methyl ist,
- m: eine ganze Zahl von 2 bis 7, vorzugsweise von 2 bis 3 ist,
- n: die ganze Zahl 1 oder 0 ist, und
- M: Wasserstoff oder ein Kation, wie oben beschrieben, z. B. ein Alkalimetall, Erdalkalimetall oder Ammonium, ist.

Der Begriff "Niederalkyl" oder "Hydroxyalkyl" bedeutet lineare oder verzweigte, gesättigte aliphatische Kohlenwasserstoffreste und substituierte Kohlenwasserstoffreste mit einem bis etwa drei Kohlenstoffatomen, wie beispielsweise Methyl, Ethyl, Propyl, Isopropyl, Hydroxypropyl, Hydroxyethyl und dergleichen. Der Begriff "höheres Alkyl oder Alkenyl" bedeutet lineare oder verzweigte, gesättigte (d. h. "Höheralkyl") und ungesättigte (d. h. "Höheralkenyl") aliphatische Kohlenwasserstoffreste mit acht bis 20 Kohlenstoffatomen, wie zum Beispiel Lauryl, Cetyl, Stearyl, Oleyl.

Der Begriff "höheres Alkyl oder Alkenyl" schließt Mischungen von Resten ein, welche eine oder mehrere intermediäre Bindungen wie Ether- oder Polyether-Bindungen, oder nicht-funktionelle Substituenten, wie Hydroxyl- oder Halogenreste, enthalten können, wobei der Rest von hydrophobem Charakter bleibt.

Beispiel von Betain-Tensiden der obenstehenden Formel, worin n Null ist, schließen die Alkylbetaine, wie Cocosdimethylcarboxymethylbetain, Lauryldimethylcarboxymethylbetain, Lauryldimethyl-alpha-carboxyethylbetain, Cetyldimethylcarboxymethylbetain, Lauryl-bis-(2-hydroxyethyl)carboxymethylbetain, Stearyl-bis(2-hydroxypropyl)carboxy-methylbetain, Oleyldimethyl-gamma-carboxypropylbetain, Lauryl-bis(2-hydroxypropyl)-alpha-carboxyethylbetain ein. Die Sulfobetaine können repräsentiert werden durch Cocosdimethylsulfopropylbetain, Stearyldimethylsulfopropylbetain und Lauryl-bis(2-hydroxyethyl)sulfopropylbetain.

Spezifische Beispiele sind Amidobetaine und Amidosulfobetaine unfassend die Amidocarboxybetaine, wie Cocosamidodimethylcarboxymethylbetain, Laurylamidodimethylcarboxymethylbetain, Cetylamidodimethylcarboxymethylbetain, Laurylamido-bis-(2-hydroxyethyl)carboxymethylbetain und Cocosamido-bis-(2-hydroxyethyl)carboxy-methylbetain.

Die Amidosulfobetaine können durch Cocosamidodimethylsulfopropylbetain, Stearylamidodimethylsulfopropylbetain und Laurylamido-bis(2-hydroxyethyl)sulfopropylbetain repräsentiert werden.

Nachfolgend seien Beispiele für geeignete kationische Tenside aufgeführt:

Genannt sind z.B. quaternäre Ammoniumverbindungen entsprechend der allgemeinen Formel: 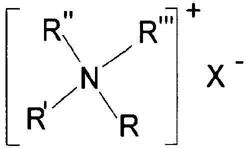 worin R, R', R" und R"' unabhängig eine aliphatische Gruppe von 1 bis 22 Kohlenstoffatomen, oder eine aromatische, Alkoxy-, Polyoxyalkylen-, Alkylamido-, Hydroxyalkyl-, Aryl- oder Alkylaryl-Gruppe mit bis zu 32 Kohlenstoffatomen sind und X ein salzbildendes Anion wie Halogen (zum Beispiel Chlorid, Bromid), Acetat-, Citrat-, Lactat-, Glycolat-, Phosphat-, Nitrat-, Sulfat-, Methosulfat und Alkylsulfat-Resten ist. Die aliphatischen Gruppen können, zusätzlich zu Kohlenstoff- und Wasserstoffatomen, Ether- und andere Gruppen, wie Aminogruppen, enthalten. Die längerkettigen aliphatischen Gruppen, mit z. B. 12 Kohlenstoffatomen oder mehr, können gesättigt oder ungesättigt sein. Es ist bevorzugt, wenn R, R', R" und R"' unabhängig voneinander C₁- bis C₂₂-Alkyl sind. Insbesondere bevorzugt sind derartige Verbindungen mit zwei langen Alkylketten und zwei kurzen Alkylketten oder einer langen Alkylkette und drei kurzen Alkylketten.

Die langen Alkylketten haben 12 bis 22 Kohlenstoffatome, vorzugsweise 16 bis 22 Kohlenstoffatome, und die kurzen Alkylketten weisen 1 bis 4 Kohlenstoffatome, vorzugsweise 1 bis 3 Kohlenstoffatome, auf. Darüber hinaus sind geeignet Alkyl-Pyridiniumsalze, Salze von Aminoxiden, Sulfoniumsalze und Tropyliumsalze. Besonders geeignet sind Cetyl-, Cetearyl- und Behenyl- Trimethylammonium- Choride, Bromide und Methosulfate (INCI).

Als besonders geeignet einzusetzende nichtionische oder anionische Tenside seien folgende Geminitenside genannt, wobei bei unterschiedlichen Alkoxylat - Gruppen die Alkoxylat - Gruppen jeweils statistisch verteilt oder in Blockstruktur angeordnet sein können. Bei Blockstruktur-Anordnung ist es besonders vorteilhaft ist, wenn zuerst der Propoxylat - Block verknüpft wird. Besonders geeignet sind die Strukturen A.I, A.II und B.III.

Auf amid- oder aminhaltigen Spacem beruhende Strukturen
A.I Geminitenside der allgemeinen Formel (A.I) analog WO 96/14926 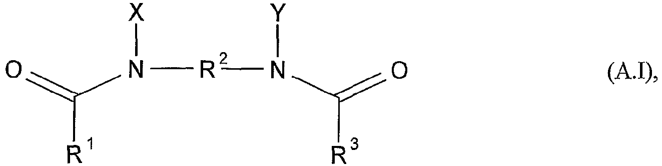 wobei die Substituenten folgende Bedeutung haben:
   - R¹, R³: C₅- bis C₂₅-Alkyl, verzweigt oder unverzweigt, auch ungesättigt;
   - R²: C₁- bis C₁₂-Alkylen;
   - X,Y: (C₂H₄O-)ₓ(C₃H₆O-)_{y}-FR ; x+y ≥ 1, x: 0-15, y: 0-10 und
   - FR: -SO₃M, -CH₂-CO₂M, -P(O)(OM)₂, H, -C₃H₆SO₃M; oder
   -CH₂(CHOH)₄CH₂OH, soweit x+y=0; wobei M = Alkali, (Alkyl)Ammonium, Alkanolammonium, H oder ½ Erdalkali ist.
A.II Geminitenside mit Dicarbonsäure-stämmigen Spacem der allgemeinen Formel (A.II) analog WO 96/25388 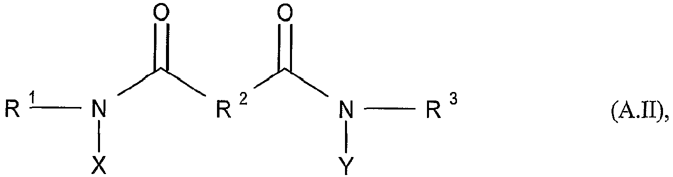 wobei die Substituenten die für die allgemeine Formel (A.I) angegebene Bedeutung haben.
A.III Amphotere Geminitenside der allgemeinen Formel (A.III) analog WO 97/31890 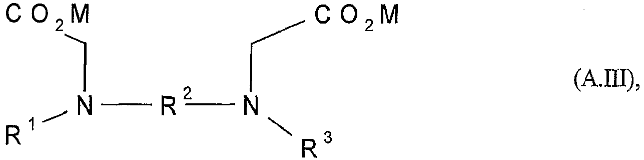 wobei die Substituenten die für die allgemeine Formel (A.I) angegebene Bedeutung haben. Geminitenside der allgemeinen Formel (A.III) sind amphotere Verbindungen, so daß sie bei entsprechend saurem Umgebungsmedium auch kationisch werden können.

Auf amid- oder aminhaltigen Spacem beruhende Strukturen
B.I Geminitenside der allgemeinen Formel (B.I) analog DE 19622612 oder JP-A 10-175934 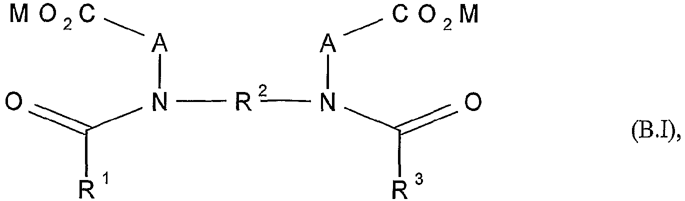 wobei die Substituenten folgende Bedeutung haben:
   - R¹, R³: C₅- bis C₂₅- Alkyl, verzweigt oder unverzweigt, auch ungesättigt;
   - R²: C₁- bis C₁₂-Alkylen;
   - A: CHR⁴, CH₂, C₂H₄, C₃H₆, C₄H₈;
   - R⁴: Rest einer Aminocarbonsäure und
   - M: Alkali, (Alkyl)Ammonium, Alkanolammonium, H oder ½ Erdalkali.
B.II Geminitenside der allgemeinen Formel (B.II) analog EP 0 708 079 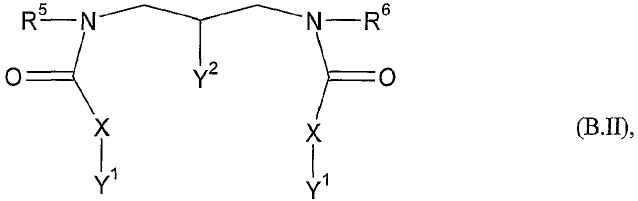 wobei die Substituenten die für die allgemeine Formel (B.I) angegebene Bedeutung haben und
   - R⁵, R⁶: C₆- bis C₃₆-Alkyl, verzweigt oder unverzweigt, auch ungesättigt;
   - X: Alkylen- oder Alkenylengruppe mit 1 bis 6 Kohlenstoffatomen, die mit einer Hydroxylgruppe oder einer Sulfonsäuregruppe oder einer Carboxygruppe substituiert sein kann;
   - Y¹: eine Sulfonat- oder Sulfatgruppe oder eine Carboxylgrupppe und
   - Y²: eine Hydroxylgruppe, ein Schwefelsäurerest oder -O-(CO)X-COOH bedeuten.
B.III Geminitenside der allgemeinen Formel (B.III) analog JP-A-8-311003 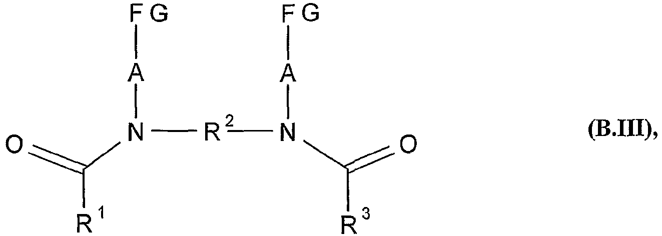 wobei die Substituenten die für die allgemeine Formel (B.I) angegebene Bedeutung haben und
   FG -COOM oder -SO₃M bedeutet.
B.IV Geminitenside der allgemeinen Formel (B.IV) analog JP-A 11-60437 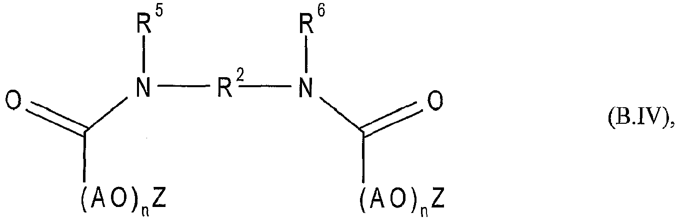 wobei die Substituenten, die bei den allgemeinen Formeln (B.I) und (B.II) angegebene Bedeutung haben und
   - AO: Alkylenoxideinheiten, d.h. Ethylenglykol-, Propylenglykol und Butylenglyko-lethereinheiten, allein oder statistisch oder blockweise verteilt, mit n = 1 bis 20 und
   - Z: -SO₃M, -C₂H₄SO₃M, -C₃H₆SO₃M, -P(O)(OM)₂ oder -CH₂-COOM, -C₂H₄-COOM bedeuten.

Auf amid- oder aminhaltigen Spacem beruhende Strukturen
C.I Geminitenside der allgemeinen Formel (C.I) analog EP 0 697 244 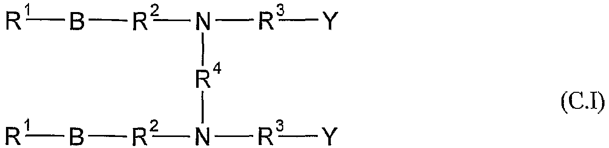 wobei die Substituenten folgende Bedeutung haben:
   - R¹: C₅- bis C₂₅-Alkyl, verzweigt oder unverzweigt, auch ungesättigt, hydroxysubstituiert oder perfluoriert;
   - R²: C₁- bis C₁₂-Alkylen oder hydroxysubstituierte Derivate davon;
   - B: eine Amidgruppe [-C(O)N(R²)- oder -N(R⁵)C(O)-], eine Carboxylgruppe [-C(O)O- oder -OC(O)-], eine Polyethergruppe [-(O(R⁶-O)ₓ-];
   - R⁵: für C₁- bis C₄-Alkyl oder hydroxysubstituiertes Alkyl oder H steht;
   - R⁶: für C₂- bis C₄-Alkylen;
   - x: eine Zahl von 1 bis 20;
   - R³: für C₁- bis C₁₂- Alkyl oder hydroxysubstituierte Derivate davon, R⁷-D-R⁷ oder eine Polyethergruppe [-(O(R⁶-O)ₓ-];
   - R⁷: für C₁- bis C₆- Alkylen oder hydroxysubstituierte Derivate davon;
   - D: -O-, -S-, -N(R⁸)- ;
   - R⁴: Alkylen oder Alkylaryl mit 1 bis 12 C-Atomen oder die hydroxysubstituierten Derivaten oder R⁹-D¹-R⁹ ;
   - R⁸: C₁- bis C₁₂-Alkyl oder hydroxysubstituiertes Alkyl oder H oder R⁹-D¹-R⁹;
   - R⁹: für C₁- bis C₆- Alkylen oder hydroxysubstituierte Derivate davon oder Aryl;
   - D¹: -O-, -S-, -SO₂-, -C(O)-, [-(O(R⁷-O)ₓ-], (R¹⁰)ₜ[N(R¹⁰)]_{z} oder Aryl;
   - R¹⁰: C₁- bis C₁₂-Alkyl oder hydroxysubstituiertes Alkyl oder H oder Aryl;
   - t,z: unabhängig voneinander eine Zahl von 1 bis 4 bedeuten und
   - Y: unabhängig voneinander für -SO₃H, O-SO₃H, -OP(O)(OH)₂, -P(O)(OH)₂, -COOH, -CO₂-C₆H₄-SO₃H und deren Salze davon steht.
C.II Geminitenside der allgemeinen Formel (C.II) analog EP 0 697 245 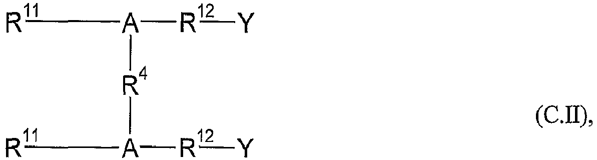 wobei die Substituenten die für die allgemeine Formel (C.I) angegebene Bedeutung haben und
   - R¹¹: C₅- bis C₂₃-Alkyl, verzweigt oder unverzweigt, auch ungesättigt, hydroxysubstituiert oder perfluoriert oder R¹⁴-B-R²;
   - R¹⁴: C₁- bis C₁₂-Alkyl, verzweigt oder unverzweigt, auch ungesättigt, oder die hydroxysubstituierten Derivate;
   - R¹²: C₁- bis C₁₂-Alkylen, verzweigt oder unverzweigt, gesättigt, gegebenenfalls bis zu 2-fach nicht-benachbart ungesättigt, oder die hydroxysubstituierten Derivate oder eine Amidgruppe [-C(O)N(R²)- oder N(R⁵)C(O)-], eine Carboxylgruppe [-C(O)O- oder -OC(O)-], eine Polyethergruppe [-(O(R⁶-O)ₓ-] oder R⁹-D¹-R⁹ und
   - A: -CR⁶= oder -N= unter der Voraussetzung, daß wenn A gleich -N= ist, R¹¹ gleich R¹⁴-B-R² bedeuten.
C.III Geminitenside der allgemeinen Formel (C.III) analog DE 4227391 und DE 19608117 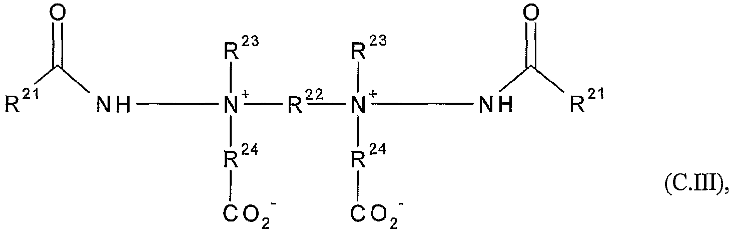 wobei die Substituenten die für die allgemeinen Formeln (C.I) und (C.II) angegebene Bedeutung haben und
   - R²¹: C₅- bis C₂₃-Alkyl, verzweigt oder unverzweigt, auch ungesättigt;
   - R²², R²⁴: C₁- bis C₆ Alkylen;
   - R²³: Methyl, Ethyl, Propyl oder eine Polyethergruppe [-(O(R⁶-O)ₓ]
   bedeuten.
D. I Geminitenside der allgemeinen Formel (D.I) analog US 5,863,886 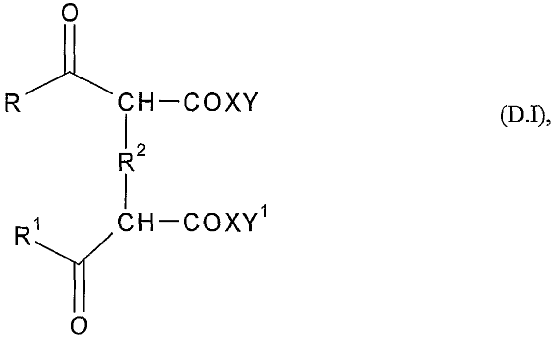 wobei die Substituenten folgende Bedeutung haben:
   - R, R¹: C₅- bis C₃₀-Alkyl, verzweigt oder unverzweigt, auch ungesättigt, hydroxysubstituiert oder perfluoriert;
   - R²: C₁-bis C₁₀- Alkylen, Arylen und hydroxysubstituierte Derivate, ein Polyether [-O(R⁴O)ₓ-], -S-, -SO₂-, -O-, -S-S-, -O-R⁵-O- oder -S-R⁵-S-; Variable für eine direkte Bindung zwischen den beiden α-Kohlenstoffen;
   - R⁴: C₂- bis C₄-Alkylen;
   - R⁵: C₁- bis C₁₀-Alkylen, Arylen oder Alkylarylen, -N(R⁶)- oder -(NR⁶)-R⁷-(NR⁶)-;
   - R⁶: C₁- bis C₆-Alkyl;
   - R⁷: C₁- bis C₆-Alkyl, wobei R⁷ und R⁶ auch Teil eines heterocyclischen Ringes sein können;
   - X: Polyether [-O(R⁴O)ₓ-], wobei x eine Zahl von 1 bis 30 ist, -O-, NZ;
   - Z: C₁- bis C₁₀- Alkyl, Aryl, Alkylaryl oder H und
   - Y, Y¹: unabhängig voneinander H, -CH₂-COOH und Salze, ein Kohlenwasserstoffrest mit mindestens 2 Hydroxylgruppen, wie Erythrose, Threose, Ribose, Arabinose, Xylose, Fructose, Lyxose, Allose, Altrose, Glucose, Mannose, Galactose und ihre Mischungen.
D.II Geminitenside der allgemeinen Formel (D.II) 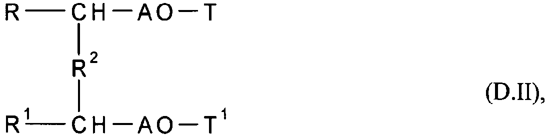 wobei die Substituenten die für die allgemeine Formel (D.I) angegebene Bedeutung haben und
   - AO: -C(O)-, -C(O)- [-O(R⁴O)ₓ-], -CH₂- [-O(R⁴O)ₓ-], -CH₂-O-;
   - T, T¹: unabhängig voneinander -OM, -H, -CH₃, -C₂H₅, -SO₃M, -CH₂COOM, -C₂H₄-COOM, -C₃H₆-SO₃M, -O-P(O)(OM)₂ und
   - M: Alkali, ½ Erdalkali, Ammonium, Mono-, Di-, Trialkanolammonium oder H bedeuten.
D.III Geminitenside der allgemeinen Formel (D.III) analog WO 96/16930 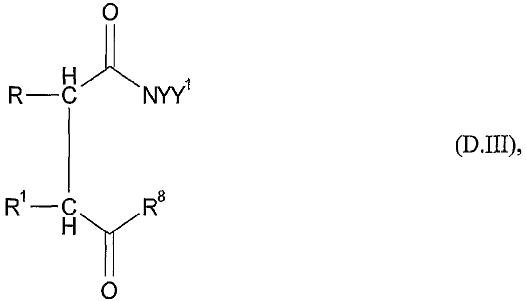 wobei die Substituenten die für die allgemeinen Formeln (D.I) und (D.II) angegebene Bedeutung haben und
   - R⁸: NYY¹, -O(R⁴O)ₓH oder -O(R⁴O)ₓ-C(O)-CHR-CHR¹-C(O)NYY¹ bedeutet.
D.IV Geminitenside der allgemeinen Formel (D.IV) analog WO 96/25384 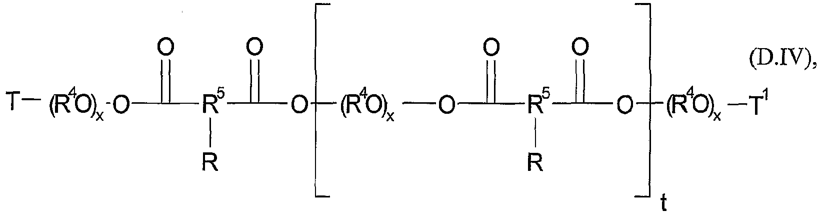 wobei die Substituenten die für die allgemeinen Formeln (D.I), (D.II) und (D.III) angegebene Bedeutung haben und
   - t: eine ganze Zahl von 1 bis 100, bevorzugt 1 bis 20, besonders bevorzugt 1 bis 4 bedeutet.

### Ölphase

Die Ölphase enthält oder besteht aus Wachsen. Wachse sind eine Klasse von Stoffen, die durch ihre mechanisch-physikalischen Eigenschaften definiert sind. Ein Stoffgemisch enthaltend obigen Ölanteil wird im Sinne dieser Erfindung als Wachs bzw. als Weichwachs bezeichnet, wenn es bei 25°C von verformbar weich, über knetbar bis brüchig hart ist und einen Erweichungspunkt über 25°C insbesondere über 30°C, aufweist (jeweils bei Normaldruck, 1013 mbar).

Das Wachs kann ein erdölbasiertes Paraffinwachs, Montanwachse, ein Fischer-Tropsch Wachs, ein Polyolefinwachs sein oder aus Mischungen dieser bestehen und/oder ein Raffmationsprodukte dieser sein. Die langkettigen gesättigten aliphatischen Kohlenwasserstoffe werden häufig als Paraffinwachse bezeichnet. Die in der Industrie üblicherweise verwendeten Paraffinwachse sind Produkte der Erdölraffination und bestehen hauptsächlich aus Mischungen von bei über 40°C festen n- und iso-Alkanen unterschiedlicher Mengenverhältnisse.

Die einsetzbaren Paraffinwachse können in makro- und mikrokristalline Wachse eingeteilt werden. Makrokristalline Wachse bestehen vorwiegend aus gesättigten, geradkettigen, unverzweigten Kohlenwasserstoffen (n-Alkane) und besitzen ein Molekulargewicht, das etwa zwischen 280 und 700 (g/mol) liegt (Anzahl der Kohlenstoffatome in der Kette zwischen 20 und etwa 50). Im Unterschied zu den makrokristallinen Paraffinen bestehen die mikrokristallinen Paraffine vorwiegend aus verzweigen Alkanen (iso-Alkane) und gesättigten ringförmigen Kohlenwasserstoffen (Cycloalkane). Der Schmelzbereich liegt zwischen 60°C und 90 °C. Mikrokristalline Paraffine sind auch durch Hydroisomerisierung von Fischer-Tropsch-Wachsen zugänglich.

Geeignet sind natürliche Wachse tierischen und pflanzlichen Ursprungs, wie beispielsweise Bienenwachs und andere Insektenwachse sowie Beerenwachs, Sheabutter und/oder Lanolin (Wollwachs). Darüber hinaus pflanzliche Wachse wie Camauba-, Candellila- und Mimosawachs. Synthetische und aufgereinigte petrochemische Wachse wie Polyethylenwachs oder auch sogenannte Ozokerite sind ebenfalls geeignet. Ebenfalls geeignet sind Fischer-Tropsch-Wachse, hochmolekulare Alkane, die bei der Fischer-Tropsch-Synthese anfallen und ebenfalls aufgereinigt angeboten werden. Darüber hinaus sind auch durch Oxidation oder Umesterung modifizierte Wachse geeignet.

Einschränkend gilt hier, dass der Erweichungspunkt der gesamten Ölphase bei größer 25 °C, bevorzugt bei 30 - 90 °C und in Fällen, in denen z.B. in druckfesten Apparaturen gearbeitet werden kann auch bei 30 -150 °C bzw. 50 -150 °C liegen kann.

Weiterhin geeignete Wachse, auf die die obengenannte Definition zutrifft, sind Paraffine, Ester, auch Mischester zwischen Siliconen bzw. funktionalisierten Siliconen und organischen Komponenten jedoch insbesondere Glyceride und ihre Derivate. Dimethicone mit Viskositäten > 0,0001 mPas und auch hochviskose Siliconöle, mit Viskositäten > 60 Pas können ohne besondere Werkzeuge, die hohe Scherung ermöglichen, zu selbstemulgierenden Gelen verarbeitet werden. Daneben genannt sind auch Destillierrückstände der Petrochemie, Gatschen und Bituminen.

Besonders vorteilhaft sind Mischungen von natürlichen oder synthetischen Wachsen mit hochschmelzenden Estern, langkettigen kationischen Verbindungen wie Behentrimmonium Chlorid oder - Methosulfat (INCI) oder Esterquats (Ester des Triethanolamins oder N-Methyl-diethanolamins mit langkettigen (C18 - C32) Fettsäuren, die anschließen mit Ethylenoxid, Methylchlorid oder Dimethylsulfat quaterniert worden sind, Aminofunktionalisierten Siliconen, Guerbetalkoholen ab C28, Dialkylethern ab C 12, Alkoholpropoxylate ab C 18, da durch die Mischung die Oberflächencharakteristik (beispielsweise die Polarität und damit die Benetzbarkeit einer Wachsbeschichtung von Oberflächen) gezielt eingestellt werden kann.

Soweit in der Wachsphase noch bei 25°C flüssige Komponenten enthalten sind können diese vorteilhaft gewählt aus der Gruppe der polaren Öle, beispielsweise aus der Gruppe der Fettsäuretriglyceride, namentlich Glycerintriester gesättigter und/oder ungesättigter, verzweigter und/oder unverzweigter Alkancarbonsäuren einer Kettenlänge von 8 bis 32, insbesondere 12 bis 18 C-Atomen augewählt sein. Die Fettsäuretriglyceride können beispielsweise vorteilhaft gewählt werden aus der Gruppe der synthetischen, halbsynthetischen und natürlichen Öle, wie z. B. Cocoglycerid, Olivenöl, Sonnenblumenöl, Sojaöl, Erdnussöl, Rapsöl, Mandelöl, Palmöl, Kokosöl, Rizinusöl, Weizenkeimöl, Traubenkernöl, Distelöl, Nachtkerzenöl, Macadamianussöl, Babassuöl, Karottenöl, Palmkernöl und dergleichen mehr.

Darüber hinaus können erfindungsgemäß eingesetzt werden synthetisch hergestellte Ester von C6- bis C32- Carbonsäuren, oder Hydroxycarbonsäuren linear oder verzweigt, gesättigt oder ein bis dreifach ungesättigt, mit Di-, Tri- oder Polyhydroxyverbindungen, die alle mit Carbonsäuren abgesättigt sein können oder nur zu einem Teil, mindestens aber einfach umgesetzt sein müssen und keine signifikante Grenzflächenaktivität aufweisen dürfen. Besonders geeignet sind hier die MCT Öle (MCT = Mid-chain triglyceride) wie Caprylic/Capric Triglyceride oder auch Butylenglycol -Dicaprylate / -Dicaprate und die entsprechende Propylenglykolvarianten aber auch entsprechende Ester des Propylen- und Butylenglykols.

Weiter eignen sich (INCI) Bis-Diglyceryl-Polyacyl-adipate-1 und -2 ebenso wie ihre Vorbilder aus der Natur, Lanolin und Lanolinöl sowie Lanolinalkohol.

Weitere vorteilhafte polare Ölkomponenten können im Sinne der vorliegenden Erfindung ferner gewählt werden aus der Gruppe der Ester aus gesättigten und/oder ungesättigten, verzweigten und/oder unverzweigten Alkancarbonsäuren einer Kettenlänge von 3 bis 40 C-Atomen und gesättigten und/oder ungesättigten, verzweigten und/oder unverzweigten Alkoholen einer Kettenlänge von 3 bis 40 C-Atomen sowie aus der Gruppe der Ester aus aromatischen Carbonsäuren und gesättigten und/oder ungesättigten, verzweigten und/oder unverzweigten Alkoholen einer Kettenlänge von 3 bis 40 C-Atomen.

Esteröle können dann vorteilhaft gewählt werden aus der Gruppe Octylpalmitat, Octylcocoat, Octylisostearat, Octyldodeceylmyristat, Cetearylisononanoat, Isopropylmyristat, Isopropylpalmitat, Isopropylstearat, Isopropyloleat, n-Butylstearat, n-Hexyllaurat, n-Decyloleat, Isooctylstearat, Isononylstearat, Isononylisononanoat, 2-Ethyl-hexylpalmitat, 2-Ethylhexyllaurat, 2-Hexyldecylstearat, 2-Octyldodecylpalmitat, Stearylheptanoat, Oleyloleat, Oleylerucat, Erucyloleat, Erucylerucat, Tridecylstearat, Tridecyltrimellitat, sowie synthetische, halbsynthetische und natürliche Gemische solcher Ester, wie z. B. Jojobaöl, Mandel-, Orangen-, Macadamia-, Babassu-, Evening Primrose und andere Öle. Guerbetalkohole von C10 bis C36 können ebenfalls als polare Ölkomponenten eingesetzt werden.

Ferner können die Ölphasen vorteilhaft gewählt werden aus der Gruppe der Dialkylether und Dialkylcarbonate, vorteilhaft sind z. B. Dicaprylylether (Cetiol OE, Cosmacol OE) und/oder Dicaprylylcarbonat, beispielsweise das unter der Handelsbezeichnung Cetiol CC bei der Fa. Cognis erhältliche.

Die Ölkomponente kann ferner sein ein Neopentylglykoldiheptanoat, ein Propylenglykol-dicaprylat/dicaprat, ein Caprylic/Capric/Diglycerylsuccinat, ein Butylenglykol-Dicaprylat/Dicaprat, ein C12/13-Alkyllactat, ein Di-C12/13-Alkyltartrat, ein Triisostearin, ein Dipentaerythrityl-Hexacaprylat/Hexacaprat, Propylenglykolmonoisostearat, und/oder Tricaprylin.

Vorteilhafte Ölkomponenten sind ferner z.B. Butyloctylsalicylat (beispielsweise das unter der Handelsbezeichnung Hallbrite BHB bei der Fa. CP Hall erhältliche), Hexadecylbenzoat und Butyloctylbenzoat und Gemische davon (Hallstar AB) und/oder Diethylhexylnaphthalat.

Auch beliebige Abmischungen solcher Ölkomponenten sind vorteilhaft im Sinne der vorliegenden Erfindung einzusetzen.

Ferner können die Ölphasen ebenfalls vorteilhaft auch unpolare Öle enthalten, beispielsweise verzweigte und unverzweigte Kohlenwasserstoffe und -wachse, insbesondere Mineralöl, Vaseline (Petrolatum), Paraffinöl, Squalan und Squalen, Polyolefine, hydrogenierte Polyisobutene und Isohexadecan. Unter den Polyolefinen sind Polydecene die bevorzugten Substanzen.

Vorteilhaft können die Ölphasen ferner einen Gehalt an cyclischen oder linearen Silikonölen aufweisen oder vollständig aus solchen Ölen bestehen, wobei allerdings bevorzugt wird, außer dem Silikonöl oder den Silikonölen einen zusätzlichen Gehalt an anderen Ölphasenkomponenten einzusetzen. Silikonöle sind synthetische polymere Verbindungen, in denen Silicium-Atome über Sauerstoff-Atome verknüpft sind. Die methylsubstituierten Polyorganosiloxane werden auch als Polydimethylsiloxan bzw. Dimethicon (INCI) bezeichnet. Dimethicone gibt es in verschiedenen Kettenlängen bzw. mit verschiedenen Molekulargewichten. Ebenso verwendbar sind (INCI) Dimethiconole.

Besonders vorteilhafte Polyorganosiloxane im Sinne der vorliegenden Erfindung sind beispielsweise Dimethylpolysiloxane [Poly(dimethylsiloxan)]. Ferner vorteilhaft sind Phenylmethylpolysiloxane (INCI: Phenyl Dimethicone, Phenyl Trimethicone), cyclische Silikone (Decamethylcyclopentasiloxan, Dodecamethylcyclohexasiloxan), welche nach INCI auch als Cyclomethicone bezeichnet werden, aminomodifizierte Silikone (INCI: Aminodimethicone) und Silikonwachse, z. B. Polysiloxan-PolyalkylenCopolymere (INCI : Stearyl Dimethicone und Cetyl Dimethicone) und Dialkoxydimethylpolysiloxane (Stearoxy Dimethicone und Behenoxy Stearyl Dimethicone).

Bitumenmischungen verschiedener Viskositäten und Provinienzen (aus Petrochemie oder aus natürlich vorkommenden Quellen (sog. Asphaltene) können ebenfalls vorteilhaft eingesetzt werden. Bei zu hohen Erweichungspunkten muss in Drucksystemen und oberhalb von 100 °C gearbeitet werden, was die erfindungsgemäße Verwendung aber nicht einschränkt. In diesem Fall müssen besonders hitzeresistente Tenside eingesetzt werden.

Es kann auch gegebenenfalls vorteilhaft sein, Wachse, beispielsweise Cetylpalmitat, als alleinige Lipidkomponente der Ölphase einzusetzen. Vorteilhaft wird die Ölphase gewählt aus der Gruppe 2-Ethylhexylisostearat, Octyldodecanol, Isotridecylisononanoat, Isoeicosan, 2-Ethylhexylcocoat, C12-15-Alkylbenzoat, Capryl-Caprinsäure-triglycerid, Dicaprylylether, didodecylether, didecylether.

Ferner können Perfluoroether, Perflouroalkohole und - säuren und deren Derivate, sowie mit perfluoro-Gruppen derivatisierte Silicone und - Silane alleinig oder als Bestandteile der Ölphase eingesetzt werden.

Ferner können vorteilhaft in der Ölphase bzw. als alleinige Komponenten der Ölphase eingesetzt werden Ester von Hydroxycarbonsäuren, besonders bevorzugt sind Alkylcarbon- und Benzoyl- wie auch Salicylsäureester mit Alkoholen, mit C2 bis C40, linear oder verzweigt, gesättigt oder ungesättigt und Mischungen der verschiedenen Alkohole. Die Alkylester der Glykolsäure, Milchsäure, Zitronensäure, Weinsäure, Benzoesäure, 2-Ethylhexansäure, Apfel- und Äpfelsäure, Salicylsäure und Benzoesäure sind besonders geeignet.

Ferner kann die Ölphase auch aus Monomeren und deren Polymeren und Co-Polymeren bestehen, Vinylakohol und seine Ester, bevorzugt Vinylacetat, Vinylchlorid, Acrylsäure und deren Ester, Methacrylsäure und deren Ester, Ethylen, alpha-und mittelständige Olefine mit C2 bis C22, besonders geeignet Ethylen, Propylen, Butylen, Styrol, Cyclopentadien und/oder Butadien.

Die Viskosität der aus der Verdünnung des selbstemulgierenden Gels (G) entstehenden Nanoemulsion (C) kann mit Hilfe aller gängigen Hydrokolloide und Verdicker kontrolliert werden.

Diese Hydrokolloide und Verdicker können vorteilhaft gewählt werden aus der Gruppe der organischen oder anorganischen Verdicker und Hydrokolloide. Unter den organischen Hydrokolloiden sind sowohl die neutralen, anionischen als auch kationischen und amphoteren geeignet, wobei sowohl lineare als auch Cross Polymere als Hydrokolloide und Verdicker sich als geeignet für die erfindungsgemäßen Emulsionen erwiesen haben. Unter den anorganischen sind sowohl die reinen anorganischen Verdicker wie auch die organisch modifizierten Verdicker und Hydrokolloide geeignet. Darüber hinaus können synergistisch wirkende Kombinationen innerhalb beider Gruppen wie auch aus beiden Gruppen stammend günstig eingesetzt werden.

Als Beispiele sollen hier Assoziativverdicker, wie hydrophob modifizierte Acryl-, Metacryl, Maleinsäure- homo- und / oder Copolymerisate, Polyurethanderivate, Acrylamidderivate, Non-Assoziativverdicker wie quellbare Verdicker basierend auf Acryl-, Methacryl, Maleinsäure Homo- oder Copolymer und deren Derivaten, Cellulose und Cellulosederivate (Carboxymethylcellulose, Hydroxyethylcellulose, Methylcellulose, Methylhydroxyethylcellulose, Methylhydroxypropylcellulose, Ethylhydroxyethylcellulose, hydrophob modifizierte Ethylhydroxyethylcellulose, Mikrokristalline Cellulose, Cellulose Gum und Mischungen aus diesen beiden mit unterschiedlichen Verhältnissen von mikrokristalliner Cellulose zu Cellulose Gum, hydrophob modifizierte Hydroxyethylcellulose), Tone (Schichtsilicate, Smectite, Alumosilicate oder Schichtsilicate wie Montmorillonit, Bentonit Hectorit, Attapulgite) auch Magnesium Aluminium Silicate und Organotonderivate (organisch modifizierte Alumosilicate, Bentonite, Hectorite) aber auch Kieselsäurederivate (Fumed Silica), Organowachse (Rhizinusölderivate, Polyamidbasierte Organowachse, Polyesteramide und metallorganische Verdicker (Titanate und Zirconate) - besonders in Kombination mit Stärke- und Cellulosederivaten, natürliche Gum-Derivate wie Guar- oder Stärkederivate, genannt sein.

In der Gruppe der Gumme sind besonders geeignet die natürlichen und die modifizierten Polymere, bevorzugt pflanzlichen Ursprungs wie Gummi Arabicum, das aus verschienen Akazienarten hergestellt werden kann. Auch von anderen Bäumen lassen sich natürliche Gummen gewinnen, z.B. Tragacanth Gum. Ebenfalls geeignet sind Alginate und Carrageenan und ihre Derivate. Xanthan Gum und seine Variationen und Derivate sind ebenfalls besonders als Hydrocolloid und Verdicker geeignet. Guar Caroube und Pectine gehören ebenfalls zur Gruppe der Gumme und sind geignet.

Zu den natürlichen, als Verdicker und Hydrocolloid geeigneten Polymeren gehört ebenfalls die Stärke und ihre Derivate (Dextrinderivate), wie Carboxymethylstärke, Hydroxymethylstärke aber auch phosphatierte Stärke.

Elektrolyte, seien es ein- oder mehrwertige, werden bis zu einer Konzentration von ca. 40 %, bevorzugt bis 20 % und besonders bevorzugt bis 15 %, ohne signifikante Beeinträchtigung des Selbstemulgiermechanismusses und der daraus entstehenden Emulsionen toleriert.

Erfindungsgemässe kosmetische und dermatologische Zubereitungen können kosmetische Hilfsstoffe enthalten, wie sie üblicherweise in solchen Zubereitungen verwendet werden, z. B. Konservierungsmittel, Bakterizide, Parfüme, Substanzen zum Verhindern des Schäumens, Farbstoffe, Pigmente, die eine färbende Wirkung haben, Verdickungsmittel, weichmachende, anfeuchtende und/oder feuchhaltende Substanzen, organische Lösemittel, Aktivstoffe, wie zum Beispiel Vitamine und ihre Derivate, Pflanzenextrakte, Enzyme, Steroide und ihre Derivate und/oder Ceramide und ihre Derivate.

Besonders bevorzugte Anwendungen sind folgende:
- Dispersionen für Personal Care und Kosmetik
- Lebensmittelanwendungen
- Textil- und Lederhilfsmittel
- Dispersionen für den Agro-Bereich
- Dispersionen für die Metallbearbeitung
- Siliconöl- Dispersionen in Wasser
- Dispersionen zur Hydrophobierung und/oder für die Bauchemie
- Dispersionen für die Haushalts- und Kfz-Pflege (Möbelpflege, Fahrzeuge aussen und innen)
- Dispersionen für die Schuh- und Textilpflege
- Dispersionen für die Herstellung von technischen Textilien
- Dispersionen von Fluorkohlenwasserstoffen und -derivaten
- Dispersionen von Polymeren für Versiegelungs-, Lack- und Klebstoffanwendungen
- Dispersionen von Polymeren für Non-Wovens, Wand- und sonstige Oberflächenbeschichtungen

Die nachfolgenden Beispiele illustrieren die Erfindung (% jeweils = Gew.%):

### Beispiel 1: Bienenwachs-Emulsion

| | | |
|---|---|---|
| A) | MARLINAT 242/90M (MIPA-Laureth Sulfate (und) Propylene Glycol) | 1,9% |
| | SAFOL 23 (Iso C_{12/13} Alkohol) | 0,9% |
| | Glycerin | 3,1% |
| | Wasser (Aqua), Deionized | 0,9% |
| B) | Bienenwachs : MIGLYOL 812 (Caprylic/Capric Triglyceride (1:1) | 38,4% |
| C) | Wasser (Aqua), Deionized | 54,8% |

### Herstellung:

Phase A homogen mischen. Phase A vorlegen bei 60°C , Phase B erwärmen bis flüssig, unter Rühren im laminaren Strömungsfeld (ca. 1500 U/min; Drahtrührer) langsam zudosieren, 1 min nachrühren. Phase C auf 60°C erwärmen unter Rühren zugeben. Unter Rühren abkühlen lassen. Die Emulsion weist eine mittlere Tröpfchengröße von 300 nm auf.

### Beispiel 2: Wachs-Emulsion

| | | |
|---|---|---|
| A) | MARLINAT 242/90M (MIPA-Laureth Sulfate (and) Propylene Glycol) | 1,7% |
| | EMULDAC AS 25 (Ceteareth-25) | 0,7% |
| | Glycerin | 3,3% |
| | Wasser (Aqua), Deionized | 0,2% |
| B) | COSMACOL SE : COSMACOL OE (Distearylether: Dioctyether) (9:1) | 35,3% |
| C) | Wasser (Aqua), Deionized | 58,8% |

### Herstellung:

Phase A erwärmen, homogen mischen. Phase A vorlegen, Phase B unter Rühren im laminaren Strömungsfeld (ca. 1500 U/ min; Drahtrührer in Paddelform) langsam zudosieren, 1 min nachrühren und Phase C unter Rühren zugeben. Die Emulsion weist eine mittlere Tröpfchengröße von 300 nm auf.

### Beispiel 3: Bienenwachsemulsion in Duschgel

| | | |
|---|---|---|
| A) | MARLINAT 242/90M (MIPA-Laureth Sulfate (und) Propylene Glycol) | 0,15% |
| | SAFOL 23 (C_{12/13} Alkohol) | 0,07% |
| | Glycerin | 0,3% |
| | Wasser (Aqua), Deionized | 0,01% |
| B) | Bienenwachs | 1,0 % |
| C) | Wasser (Aqua), Deionized | 4,0% |
| D) | MARLINAT 242/70 (Na-Laureth Sulfate) | 7,5% |
| | Wasser (Aqua), Deionized | zu 100,0% |
| | AMPHOLYT JB 130 K (Cocoamidopropyl Betaine) | 7,50% |
| | COSMACOL ELI (C12-13 Alkyl Lactate) | 0,3% |
| | SOFTIGEN 767 (PEG-6 Caprylic/Capric Glycerides) | 0,3% |
| | D- Panthenol | 1,0% |
| | Microcare BR | 0,1 % |
| | NaCl | 2,4% |

### Herstellung:

Phase A homogen mischen. Phase A vorlegen bei 60°C , Phase B erwärmen bis flüssig, unter Rühren im laminaren Strömungsfeld (ca. 1500 U/ min; Drahtrührer) langsam zudosieren, 1 min nachrühren, Phase C auf 60°C erwärmen, unter Rühren zugeben und unter Rühren abkühlen lassen. Phase D homogen mischen, Phase ABC unter Rühren zugeben.

### Beispiel 4: Wachs-Emulsion mit kationischem Tensid

| | | |
|---|---|---|
| A) | Cetyltrimethylammoniumchlorid | 2,4 % |
| | Safol 23 (Iso-C12-13 Alkohol) | 1,1 % |
| | Glycerin | 4,0 % |
| | Wasser (Aqua), Deionized | 5,0 % |
| B) | COSMACOL SE : ISOFOL 28 (Distearylether : Decyloctadekanol) (1: 1) | 17,0 % |
| C) | Wasser (Aqua), Deionized | 69,5 % |
| | Phenonip, Clariant | 1,0 % |

### Herstellung:

Phase A erwärmen, homogen mischen. Phase A vorlegen, Phase B unter Rühren im laminaren Strömungsfeld (ca. 1500 U/ min; Drahtrührer) langsam zudosieren, 1 min nachrühren und Phase C unter Rühren zugeben. Die Emulsion weist eine mittlere Tröpfchengröße von 360 nm auf.

### Beispiel 5: Wachs-Emulsion mit kationischem Tensid

| | | |
|---|---|---|
| A) | Cetyltrimethylammoniumchlorid | 2,0 % |
| | Safol 23 (Iso-C12-13 Alkohol) | 1,1 % |
| | Glycerin | 4,0 % |
| | Wasser (Aqua), Deionized | 3,0 % |
| B) | Bienenwachs : MIGLYOL 812 (Caprylic/Capric Triglyceride (1:1) | 35,3% |
| C) | Wasser (Aqua), Deionized | 53,6 % |
| | Phenonip, Clariant | 1,0 % |

### Herstellung:

Phase A erwärmen, homogen mischen. Phase A vorlegen, Phase B unter Rühren im laminaren Strömungsfeld (ca. 1500 U/ min; Drahtrührer) langsam zudosieren, 1 min nachrühren und Phase C unter Rühren zugeben. Die Emulsion weist eine mittlere Tröpfchengröße von 260 nm auf.

## Patentansprüche

1. Verfahren zur Herstellung von Öl in Wasser Dispersion aus selbstemulgierenden Gelkonzentraten umfassend die folgenden Schritte:
(a) Bereitstellen einer Emulgatorkonzentrates (A) enthaltend zumindest
(A.1) zu 0 bis 80 Gew.% ein oder mehrere Polyole (P),
(A.2) zu 0,01 bis 99 Gew.% Wasser (W) und
(A.3) zu 1 bis 80 Gew.% ein ionisches Tensid (I) und / oder ein nicht-ionisches Tensid (N)
bezogen auf das Emulgatorkonzentrat (A),
(b) in Kontakt bringen einer Ölphase (O) mit dem Emulgatorkonzentrat (A) in einem im Wesentlich ausschließlich laminaren Strömungsfeld, um ein selbstemulgierendes O/W Gelkonzentrat (G) mit einem Ölgehalt von größer 5 Gew.% zu erhalten, und
(c) Zusammenbringen des O/W Gelkonzentrats (G) mit Wasser, das auch weitere Zuschlagsstoffe enthalten kann,
wobei die Ölphase eine bei 25°C feste Wachsphase mit einem Erweichungspunkt größer 25°C ist und beim Inkontaktbringen die zusammengebrachten Komponenten von Schritt (a) und (b) bzw. von Schritt (a), (b) und (c) eine Temperatur über dem Erweichungspunkt der Wachsphase haben und die Öl in Wasser Dispersion nach dem Abkühlen suspendierte Wachsfeststoff als dispergierte Phase aufweist.

2. Verfahren nach Anspruch 1, **dadurch gekennzeichnet, dass** Emulgatorkonzentrat (A) unabhängig von einander aufweist
(A.1) zu 0,1 bis 75 Gew.% Polyol (P),
(A.3) zu 5 und 40 Gew.%, insbesondere zu 10 bis 30 Gew.%, ein ionisches Tensid (I) und / oder ein nicht-ionisches Tensid (N) und/oder
(A.2) zu 50 bis 70 Gew.% Wasser.

3. Verfahren nach Anspruch 1, **dadurch gekennzeichnet, dass** das O/W Gelkonzentrat (G) einen Ölgehalt von 60 bis 99 % und besonders bevorzugt 80 bis 98 Gew.% aufweist.

4. Verfahren nach Anspruch 1, **dadurch gekennzeichnet, dass** das O/W Gelkonzentrat sich in Wasser selbsttätig ohne Einwirken von Scherkräften zum Erhalt einer Makrodispersion/Makroemulsion (M) (im thermodynamischen Sinne) und insbesondere einer Nanodispersion/Nanoemulsion (C) einarbeitet.

5. Verfahren nach Anspruch 1, **dadurch gekennzeichnet, dass** das Wasser in Schritt (c) weniger als 5 Gew.%, vorzugsweise weniger als 2,5 Gew.%, Zuschlagsstoffe enthält.

6. Verfahren nach Anspruch 1, **dadurch gekennzeichnet, dass** das Wachs ein oder mehrere Komponenten sind ausgewählt aus der Gruppe bestehend aus: FT-Wachse, Paraffine, Carnaubau-Wachs, Dialkyl(>C14)ether, Guerbet-Alkohole mit mehr als 28 Kohlenstoffatomen, ggf. partiell oxidierte Polyethylenwachse und Silikonharze.

7. Verfahren nach Anspruch 1, **dadurch gekennzeichnet, dass** das O/W Gelkonzentrat Verdicker enthält, insbesondere Cellulose, Cellulose Gum, Magnesium/ Aluminiumsilikate und Organotonderivate, Kieselsäurederivate, Gummi Arabicum, Tragacanth Gum, Alginate und/oder Xanthan Gum.

8. Verfahren nach Anspruch 1, **dadurch gekennzeichnet, dass** das nichtionische Tensid ausgewählt ist aus einem oder mehreren Mitgliedern der Gruppe:
• C2- bis C4- Alkoxylate von linearen oder verzweigten C10- bis C22- Alkoholen, in statistischer Verteilung der Alkoxylat-Gruppen oder in Blockstruktur, vorzugsweise mit zumindest 6 Alkoxylat-Gruppen,
• Monoglycerinester von C8- bis C24- Carbonsäuren,
• C8- bis C32-Alkylpolyglycoside,
• Poly(C2- bis C4-)alkylenglykol-Glyceryl-Fettsäureester,
• Ox(C2- bis C4-)alkylierte Sorbitan(C8- bis C32-)ester,
• C2- bis C4- Alkoxylate von Mono- und Difett(>C8)säuren,
• Kondensationsprodukte von Ethylenoxid mit dem Produkt aus der Reaktion von Propylenoxid und Ethylendiaminen;
• N,N'-Diacylalkylendiamin(C2- bis C4-)alkoxylate,
• ethoxylierte Fett(>C8)amine,
• (C2- bis C4-)alkoxylierte N-Acylamide N-Acyl-N-Alkylamidalkoxylate,
• nichtionische Geminitenside und
• N-Methylgluconamide mit einem C6- bis C32- Kohlenwasserstoffrest.
• C2- bis C4- Alkoxylate von Fettsäure(>C8)-Triglyceriden, und
• mit C8- bis C22-Fettsäuren teilveresterte Polyglycerine mit 3 bis 20 Glycerin-Einheiten, vorzugsweise 3 bis 10.

9. Verfahren nach Anspruch 1, **dadurch gekennzeichnet, dass** das ionische Tensid ausgewählt ist aus einem oder mehreren Mitgliedern der Gruppe:
• C8- bis C18- Alkylethersulfate,
• Sulfosuccinate in Kombination mit C6- bis C15-Fettalkoholen,
• Fettsäuren mit 8 bis 30 Kohlenstoffatomen und deren Seifen,
• Glycerin- Mono- und Diester von C8- bis C24-, insbesondere C12- bis C18-, Carbonsäuren,
• Carbonsäuren, die mit Milch- und Zitronen- oder Weinsäure verestert worden sind und ggf. ganz oder teilweise neutralisiert sind,
• Sorbitanester von C8- bis C24-, insbesondere C12- bis C18-, Mono-, Di- und Trialkylphosphorsäureester und deren C2- und/oder C3-Alkoxylate,
• C 10- bis C24-Olefinsulfonate,
• beta-C8- bis C 18- Alkyloxyalkansulfonate,
• anionische Geminitenside,
• Aminoalkanoate der Formel R-NH(CH₂)ₙCOOM mit n, m = 1 bis 4, R = C8- bis C22-Alkyl oder Alkenyl und M = Wasserstoff, Alkalimetall, Erdalkalimetall, Ammonium oder Alkanolammonium,
• zwitterionische (Betain-)Tenside,
• Phosphate von C2- bis C4- alkoxylierten C8- bis C22- Alkoholen, insbesondere Tridecylalkohol,
• Phosphate linearer oder verzweigter C8- bis C22- Alkohole, und
• C2- bis C4- Alkoxylate von linearen oder verzweigten C8- bis C22- Alkoholen, in statistischer Verteilung der Alkoxylat-Gruppen oder in Block-Struktur, vorzugsweise mit zumindest 6 Alkoxylat-Gruppen, carboxymethyliert und verseift.

10. Verfahren nach Anspruch 1, **dadurch gekennzeichnet, dass** zumindest ein ionisches Tensid gemäß Anspruch 9 eingesetzt wird zusammen mit einem verzweigten Fettalkohol mit zumindest 8 Kohlenstoffatomen, insbesondere zusammen mit zumindest einem der nachgenannten ionischen Tenside:
• C8- bis C18- Alkylethersulfate,
• C10- bis C24-Olefinsulfonate,
• beta-C8- bis C18- Alkyloxyalkansulfonate,
• Phosphate von C2- bis C4- alkoxylierten C8- bis C22- Alkoholen, insbesondere Tridecylalkohol,
• Phosphate linearer oder verzweigter C8- bis C22- Alkohole und/oder
• C12- bis C 15- lineare oder verzweigte Alkyllactate.

11. Verfahren nach Anspruch 1, **dadurch gekennzeichnet, dass** die Öl in Wasser Dispersion mindestens 50 bis 98 Gew.% Wasser und 1 bis 50 Gew.% Wachs aufweist.

12. Verfahren nach Anspruch 1, **dadurch gekennzeichnet, dass** das Polyol Glycerin ist.

13. Verfahren nach Anspruch 1, **dadurch gekennzeichnet, dass** der Anteil des Wachses an der Ölphase wenigstens 20-100 Gew.% der Ölphase beträgt, vorzugsweise größer 80 Gew.%.

14. Verfahren nach Anspruch 13, **dadurch gekennzeichnet, dass** die Ölphase enthält
• Triglycerinester von C8- bis C24- Carbonsäuren, insbesondere C 12- bis C18- Carbonsäuren,
• Di-, Tri- oder Polyhydroxyverbindungen partiell oder vollständig verestert mit C6-bis C32- Carbonsäuren oder C6- bis C32- Hydroxycarbonsäuren,
• C12- bis C15-Alkyllbenzoate,
• Di(C12-C32)ether,
• Ester (>C32), und/oder
• Silikonöle, insbesondere Polydimethylsiloxan.

## Claims

1. A method for producing oil-in-water dispersions from self-emulsifying gel concentrates, comprising the following steps:
(a) providing an emulsifier concentrate (A) comprising at least:
(A.1) 0 to 80% by weight of one more polyols (P);
(A.2) 0.01 to 99% by weight of water (W); and
(A.3) 1 to 80% by weight of an ionic surfactant (I) and/or a non-ionic surfactant (N);
with respect to the emulsifier concentrate (A);
(b) bringing an oil phase (O) into contact with the emulsifier concentrate (A) in an essentially exclusively laminar flow field in order to obtain a self-emulsifying O/W gel concentrate (G) with an oil content of more than 5% by weight; and
(c) bringing the O/W gel concentrate (G) into contact with water, which may optionally comprises additives;
wherein the oil phase is a wax phase which is solid at 25°C and which has a softening point of more than 25°C and wherein on bringing the united components from step (a) and (b) or from step (a), (b) and (c) into contact, the temperature thereof is over the softening point of the wax phase and after cooling, the oil-in-water dispersion comprises suspended solid wax as the disperse phase.

2. The method according to claim 1, **characterized in that** the emulsifier concentrate (A) comprises, independently from each other,:
(A.1) 0.1 to 75 % by weight of polyol (P);
(A.3) 5 to 40 % by weight, in particular 10 to 30% by weight, of an ionic surfactant (I) and/or a non-ionic surfactant (N); and/or
(A.2) 50 to 70% by weight of water.

3. The method according to claim 1, **characterized in that** the O/W gel concentrate (G) has an oil content of 60 to 99 % by weight, particularly preferably 80 to 98% by weight.

4. The method according to claim 1, **characterized in that** the O/W gel concentrate self-actingly incorporates into water without the action of shear forces to obtain a macrodispersion/macroemulsion (M) (in the thermodynamic sense), and in particular into a nanodispersion/nanoemulsion (C).

5. The method according to claim 1, **characterized in that** the water in step (c) comprises less than 5% by weight, preferably less than 2.5% by weight, of additives.

6. The method according to claim 1, **characterized in that** the wax has one or more components selected from the group consisting of: FT waxes, paraffins, carnauba wax, dialkyl(> C 14)ether, Guerbet alcohols comprising more than 28 carbon atoms, optionally partially oxidized polyethylene waxes, and silicone resins.

7. The method according to claim 1, **characterized in that** the O/W gel concentrate comprises thickeners, in particular cellulose, cellulose gum, magnesium/aluminium silicates and organoclay derivatives, silica derivatives, gum arabic, tragacanth gum, alginates and/or xanthan gum.

8. The method according to claim 1, **characterized in that** the non-ionic surfactant is selected from one or more members of the following group:
• C2- to C4- alkoxylates of linear or branched C10- to C22- alcohols, in a statistical distribution of the alkoxylate groups or in a block structure, preferably with at least 6 alkoxylate groups;
• mono-glycerin esters of C8- to C24- carbonic acids;
• C8- to C32 alkylpolyglycosides;
• poly(C2- to C4-)alkyleneglycol-glyceryl fatty acid esters;
• oxy(C2- to C4-)alkylated sorbitan(C8- to C32-)esters;
• C2- to C4- alkoxylates of mono- and dibasic fatty (> C8)acids;
• condensation products of ethylene oxide with the product from the reaction of propylene oxide and ethylenediamines;
• N,N'-Diacylalkylendiamine(C2- to C4-)alkoxylates;
• ethoxylated fatty (> C8)amines;
• (C2- to C4-)alkoxylated N-acylamide N-acyl-N-alkylamidalkoxylates;
• non-ionic gemini surfactants; and
• N-methylgluconamides with a C6- to C32- hydrocarbon residue;
• C2- to C4- alkoxylates of fatty acid(> C8) triglycerides; and
• polyglycerins with 3 to 20 glycerin units, preferably 3 to 10, partially esterified with C8- to C22-fatty acids.

9. The method according to claim 1, **characterized in that** the ionic surfactant is selected from one or more members of the following group:
• C8- to C 18- alkylethersulphates;
• sulphosuccinates in combination with C6- to C15-fatty alcohols;
• fatty acids with 8 to 30 carbon atoms and their soaps;
• glycerin mono- and di-esters of C8- to C24-, in particular C12- to C 18-carbonic acids;
• carbonic acids esterified with lactic and citric or tartaric acid and which optionally are completely or partially neutralized;
• sorbitan esters of C8- to C24-, in particular C12- to C18- mono-, di- and tri-alkylphosphoric acid esters and their C2- and/or C3-alkoxylates;
• C 10- to C24- olefin sulphonates;
• beta-C8- to C18- alkyloxyalkanesulphonates;
• anionic gemini surfactants;
• aminoalkanoates with formula R-NH(CH₂)ₙCOOM where n, m = 1 to 4, R = C8-C22- alkyl or alkenyl and M = hydrogen, alkali metal, alkaline-earth metal, ammonium or alkanolammonium;
• zwitterionic (betaine-)surfactants;
• phosphates of C2- to C4- alkoxylated C8- to C22- alcohols, in particular tridecylalcohol;
• phosphates of linear or branched C8- to C22- alcohols; and
• C2- to C4- alkoxylates of linear or branched C8- to C22- alcohols, in a statistical distribution of the alkoxylate groups or in a block structure, preferably having at least 6 alkoxylate groups, carboxymethylated and in the soap form.

10. The method according to claim 1, **characterized in that** at least one ionic surfactant according to claim 9 is used together with a branched fatty alcohol comprises at least 8 carbon atoms, in particular together with at least one of the following cited ionic surfactants:
• C8- to C 18- alkylether sulphates;
• C 10- to C24- olefin sulphonates;
• beta-C8- to C18- alkyloxyalkanesulphonates;
• phosphates of C2- to C4- alkoxylated C8- to C22- alcohols, in particular trideceylalcohol;
• phosphates of linear or branched C8- to C22- alcohols; and/or
• C12-toC15- linear or branched alkyl lactates.

11. The method according to claim 1, **characterized in that** the oil-in-water dispersion comprises at least 50% to 98% by weight of water and 1% to 50% by weight of wax.

12. The method according to claim 1, **characterized in that** the polyol is glycerin.

13. The method according to claim 1, **characterized in that** the fraction of wax in the oil phase is at least 20-100% by weight of the oil phase, preferably more than 80% by weight.

14. The method according to claim 13, **characterized in that** the oil phase comprises:
• triglycerin esters of C8- to C24- carbonic acids, in particular C12- to C18-carbonic acids;
• di-, tri- or poly-hydroxy compounds partially or completely esterified with C6 to C32 carbonic acids or C6 to C32 hydroxycarbonic acids;
• C12-C15- alkylbenzoates;
• di-(C12-C32)ethers;
• esters (> C32); and/or
• silicone oils, in particular polydimethylsiloxane.

## Revendications

1. Procédé de préparation d'une dispersion huile dans eau à partir de concentrés de gels auto-émulsifiants, comprenant les étapes suivantes consistant à :
(a) mettre à disposition un concentré émulsifiant (A) contenant au moins
(A.1) de 0 à 80 % en poids d'un ou de plusieurs polyols (P),
(A.2) de 0,01 à 99 % en poids d'eau (E) et
(A.3) de 1 à 80 % en poids d'un tensioactif ionique (I) et/ou d'un tensioactif non ionique (N)
par rapport au concentré émulsifiant (A),
(b) mettre en contact une phase huileuse (H) avec le concentré émulsifiant (A) dans un champ de flux sensiblement exclusivement laminaires pour obtenir un concentré de gels (G) auto-émulsifiant H/E ayant une teneur en huile supérieure à 5 % en poids, et
(c) réunir le concentré de gels (G) H/E avec l'eau, qui peut contenir également d'autres additifs,
dans lequel la phase huileuse est une phase de cire solide à 25°C ayant un point de ramollissement supérieur à 25°C et les composants des étapes (a) et (b) ou des étapes (a), (b) et (c) réunis ont, lors de la mise en contact, une température supérieure au point de ramollissement de la phase de cire et la dispersion huile dans eau présente, à titre de phase dispersée, de la cire solide suspendue après refroidissement.

2. Procédé selon la revendication 1, **caractérisé en ce que** le concentré émulsifiant (A) présente, indépendamment les uns des autres :
(A.1) de 0,1 à 75 % en poids de polyol (P),
(A.3) de 5 à 40 % en poids, en particulier de 10 à 30 % en poids d'un tensioactif ionique (I) et/ou d'un tensioactif non ionique (N) et/ou
(A.2) de 50 à 70 % en poids d'eau.

3. Procédé selon la revendication 1, **caractérisé en ce que** le concentré de gel (G) H/E présente une teneur en huile de 60 à 99 % et particulièrement préférentiellement de 80 à 98 % en poids.

4. Procédé selon la revendication 1, **caractérisé en ce que** le concentré de gel (G) H/E s'incorpore dans l'eau de manière autonome sans l'action de forces de cisaillement pour l'obtention d'une macrodispersion/ macroémulsion (M) (au sens thermodynamique) et en particulier d'une nanodispersion/ nanoémulsion (C).

5. Procédé selon la revendication 1, **caractérisé en ce que** l'eau à l'étape (c) contient moins de 5 % en poids, de préférence moins de 2,5 % en poids d'additifs.

6. Procédé selon la revendication 1, **caractérisé en ce que** la cire est un ou plusieurs composants choisis dans le groupe constitué par : les cires FT, les paraffines, la cire de carnauba, les dialkyl(> C₁₄)éthers, les alcools de Guerbet ayant plus de 28 atomes de carbone, les cires de polyéthylène éventuellement partiellement oxydées et les résines de silicone.

7. Procédé selon la revendication 1, **caractérisé en ce que** le concentré de gel H/E comprend des épaississants, en particulier de la cellulose, de la gomme cellulosique, des silicates de magnésium/ d'aluminium et des dérivés d'organo-argile, des dérivés d'acide silicique, de la gomme arabique, de la gomme tragacanthe, des alginates et/ou de la gomme xanthane.

8. Procédé selon la revendication 1, **caractérisé en ce que** le tensioactif non ionique est choisi parmi un ou plusieurs membres du groupe constitué par :
• les alcoxylates en C₂ à C₄ d'alcools en C₁₀ à C₂₂ linéaires ou ramifiés, en distribution statistique des groupes alcoxylates ou en structure en blocs, de préférence ayant au moins 6 groupes alcoxylates,
• les esters monoglycérinés d'acides carboxyliques en C₈ à C₂₄,
• les alkyl(en C₈ à C₃₂)polyglycosides,
• les esters d'acides gras glycérylés de polyalkylène(en C₂ à C₄)glycol,
• les esters (en C₈ à C₃₂) de sorbitane oxyalkylés (en C₂ à C₄),
• les alcoxylates en C₂ à C₄ de mono- et diacides gras (>C₈),
• les produits de condensation de l'oxyde d'éthylène et du produit de la réaction de l'oxyde de propylène et des éthylènediamines ;
• les alcoxylates (en C₂ à C₄) de la N,N'-diacylalkylènediamine,
• les amines grasses (> C₈) éthoxylées,
• les alcoxylates de N-acyl-N-alkylamide N-acylamide alcoxylés (en C₂ à C₄),
• les tensioactifs géminés non ioniques et
• les N-méthylgluconamides ayant un radical hydrocarbure en C₆ à C₃₂,
• les alcoxylates en C₂ à C₄ des triglycérides d'acides gras (>C₈) et
• les polyglycérines partiellement estérifiées avec des acides gras en C₈ à C₂₂ ayant de 3 à 20 motifs de glycérine, de préférence 3 à 10.

9. Procédé selon la revendication 1, **caractérisé en ce que** le tensioactif ionique est choisi parmi un ou plusieurs membres du groupe constitué par :
• les alkyl(en C₈ à C₁₈) éther-sulfates,
• les sulfosuccinates en combinaison avec des alcools gras en C₆ à C₁₅,
• les acides gras ayant de 8 à 30 atomes de carbone et leurs savons,
• les mono- et diesters glycérinés d'acides carboxyliques en C₈ à C₂₄, en particulier en C₁₂ à C₁₈,
• les acides carboxyliques qui ont été estérifiés avec de l'acide lactique et citrique ou tartrique et ont été le cas échéant entièrement ou partiellement neutralisés,
• les esters de sorbitane des esters d'acides mono-, di- et trialkylphosphoriques en C₈ à C₂₄, en particulier en C₁₂ à C₁₈, et leurs alcoxylates en C₂ et/ou C₃,
• les sulfonates d'oléfine en Cio à C₂₄,
• les bêta-alkyloxy(en C₈ à C₁₈)alcanesulfonates,
• les tensioactifs géminés anioniques,
• les aminoalcanoates de formule R-NH(CH₂)ₙCOOM avec n, m = 1 à 4, R = groupe alkyle ou alcényle en C₈ à C₂₂ et M = hydrogène, métal alcalin, métal alcalinoterreux, ammonium ou alcanolammonium,
• les tensioactifs (de bétaïne) zwitterioniques,
• les phosphates d'alcools en C₈ à C₂₂ alcoxylés en C₂ à C₄, en particulier l'alcool tridécylique,
• les phosphates d'alcools en C₈ à C₂₂ linéaires ou ramifiés, et
• les alcoxylates en C₂ à C₄ d'alcools en C₈ à C₂₂ linéaires ou ramifiés, en distribution statistique des groupes alcoxylates ou en structure en blocs, de préférence ayant au moins 6 groupes alcoxylates, carboxyméthylés et saponifiés.

10. Procédé selon la revendication 1, **caractérisé en ce qu'**au moins un tensioactif ionique selon la revendication 9 est mis en oeuvre conjointement avec un alcool gras ramifié comprenant au moins 8 atomes de carbone, en particulier conjointement avec au moins un des tensioactifs ioniques cités ci-après :
• les alkyl(en C₈ à C₁₈) éther-sulfates,
• les sulfonates d'oléfine en C₁₀ à C₂₄,
• les bêta-alkyloxy(en C₈ à C₁₈)alcanesulfonates,
• les phosphates d'alcools en C₈ à C₂₂ alcoxylés en C₂ à C₄, en particulier l'alcool tridécylique,
• les phosphates d'alcools en C₈ à C₂₂ linéaires ou ramifiés et/ou
• les alkyl(en C₁₂ à C₁₅)lactates linéaires ou ramifiés.

11. Procédé selon la revendication 1, **caractérisé en ce que** la dispersion huile dans eau présente au moins 50 à 98 % en poids d'eau et 1 à 50 % en poids de cire.

12. Procédé selon la revendication 1, **caractérisé en ce que** le polyol est la glycérine.

13. Procédé selon la revendication 1, **caractérisé en ce que** la proportion de cire dans la phase huileuse est d'au moins 20 à 100 % en poids de la phase huileuse, de préférence de plus de 80 % en poids.

14. Procédé selon la revendication 13, **caractérisé en ce que** la phase huileuse comprend
• des esters triglycérinés d'acides carboxyliques en C₈ à C₂₄, en particulier d'acides carboxyliques en C₁₂ à C₁₈,
• des composés di-, tri- ou polyhydroxy partiellement ou entièrement estérifiés avec des acides carboxyliques en C₆ à C₃₂ ou des acides hydroxycarboxyliques en C₆ à C₃₂,
• des alkyl(en C₁₂ à C₁₅)benzoates,
• des diéthers (en C₁₂ à C₃₂),
• des esters (>C₃₂) et/ou
• des huiles siliconées, en particulier du polydiméthylsiloxane.
